# EUROPEAN PATENT APPLICATION

(11) **EP 4 682 713 A2**
(43) Date of publication of application: **21.01.2026**
(21) Application number: 25221496.0
(22) Date of filing: 04.06.2024
(51) Int. Cl.: G06F 9/451

(54) **INPUT RECOGNITION SYSTEM THAT PRESERVES USER PRIVACY**

(30) Priority: 04.06.2023 US 202363470901 P; 31.05.2024 US 202418731143
(62) Divisional of application: 24179744.8
(71) Applicant: Apple Inc., Cupertino, CA 95014 (US)
(72) Inventor: SHUTZBERG, Julian K., Cupertino, CA, 95014 (US); MEYER, David J., Cupertino, CA, 95014 (US); TEITELBAUM, David M., Cupertino, CA, 95014 (US)
(74) Representative: Lang, Johannes

(57) **Abstract**

Devices, systems, and methods that interpret user activity as user interactions with virtual elements (e.g., UI elements) positioned within in a 3D space such as an XR environment. Some implementations use an architecture that receives application UI geometry in a system or shared simulation area and outputs interaction events data (e.g., less than all user activity data) for an application to use to recognize input to the application. An OS process may be configured to provide an input support process to support recognizing input intended for one or more separately-executing applications, for example, by providing some input recognition tasks to recognize user activity as input for the applications or by converting user activity data into a format that can be more easily, accurately, efficiently, or effectively interpreted by the applications and/or in a way that facilitates preservation of user privacy.

## Description

### TECHNICAL FIELD

The present disclosure generally relates to assessing user interactions with electronic devices that involve hand and body gestures, gaze, voice, hand-held controller input, human interface device (HID) input, and/or other user activity.

### BACKGROUND

Existing user interaction systems may be improved with respect to facilitating interactions based on user activities.

### SUMMARY

Various implementations disclosed herein include devices, systems, and methods that interpret user activity as user interactions with virtual elements (e.g., user interface elements) positioned within in a three-dimensional (3D) space such as an extended reality (XR) environment. Some implementations utilize an architecture that receives application user interface geometry in a system or shared simulation area and outputs data (e.g., less than all user activity data) for an application to use to recognize input. An operating system (OS) process may be configured to provide an input support process to support recognizing input intended for one or more separately-executing applications, for example, by providing some input recognition tasks to recognize user activity as input for the applications or by converting user activity data into a format that can be more easily, accurately, efficiently, or effectively interpreted by the applications and/or in a way that facilitates preservation of user privacy. The OS process may include a simulation process that utilizes application user interface information to provide 3D information (e.g., 3D world data) used by the input support process to support recognizing input intended for the one or more separate (e.g., separately executing) apps.

User privacy may be preserved by only providing some user activity information to the separately-executed apps, e.g., withholding user activity information that that is not associated with intentional user actions such as user actions that are intended by the user to provide input or certain types of input. In one example, raw gaze data is excluded from the data provided to the applications such that applications receive limited or no information about where the user is looking or what the user is looking at times when there is no intentional UI interaction.

In some implementations, a processor performs a method by executing instructions stored on a computer readable medium. The method executes an application as an application process inside an OS of the electronic device. The OS may include an OS process configured to perform an input support process. The input support process may be executed outside of the application process. The OS process may additionally or alternatively include a simulation process configured to perform a shared (i.e., using content from the OS, multiple apps, and/or other sources) simulation of a 3D environment in which the application's UI is positioned.

The method receives, at the input support process, data corresponding to positioning of user interface (UI) elements of the application within a 3D coordinate system (e.g., a UI geometry collision world). The data may correspond to the positioning of the UI element based at least in part on data provided by the application, e.g., application data identifying the positions and/or shapes of 2D user interface elements intended for a 2D window area. The 3D coordinate system may correspond to an extended reality (XR) environment representing the physical environment and/or virtual content corresponding to content from one or more apps. The executing application may provide information about the positioning of its UI elements via a layered tree (e.g., a tree defining nesting or hierarchical relationships amongst UI elements) with some layers identified for remote (i.e., out of app process) input effects. Such application UI information may be provided from the application via an inter-process communication to a OS' simulation process that positions the application elements in the 3D coordinate system, e.g., by defining the 3D position of one or more colliders (e.g., each having a rectangular window area or other region) in the 3D space for the application's UI elements.

The method receives, at the input support process, data corresponding to user activity in the 3D coordinate system, the data associated with one or more input modalities. Various types and combinations of types of data may be received. In one example, such data includes hands data (e.g., a multi-joint hand pose skeleton) and gaze data (e.g., a stream of gaze vectors). In other example, such data includes controller data and gaze data.

The method identifies, at the input support process, data for the application based on the data corresponding to the user activity and the data corresponding to the positioning of the UI elements of the application. The data for the application may correspond to interaction events that may be selected by identifying only certain types of activity. For example, the method may select data for a user activity deemed to be associated with an intentional interaction. Examples of intentional interactions include, but are not limited to, an intentional pinch or other hand gesture while gazing at a UI target, an intentional hand motion that causes a virtual intersection between a portion of the hand and a UI target, an intentional controller input, an intentional verbal command, an gaze-only behavior deemed to be an intentional interaction. Data may be selected in a way that excludes unintentional activity, such as resting a hand in a closed posture, or passively gazing at content without intent to interact. The interaction event data may include an interaction pose (e.g., 6DOF data for a point on the app's UI), a manipulator pose (e.g., 3D location of the stable hand center or pinch centroid), an interaction state (e.g., direct hover, direct touch, indirect hover, indirect pinch, etc.) and/or identify a UI element being interacted with. The interaction data may exclude data associated with user activity occurring during the time periods between intentional events, hand skeleton detail data, and/or otherwise abstract the data to avoid providing private user data to the application. The input support process may respond to some activities by adjusting the appearance of displayed application content without notifying the application, e.g., providing hover feedback / responses based on the user's gaze directions without notifying the application of those gaze directions.

The method provides the data for the application from the input support process to the application. It may do so without allowing the application access to at least some of the data corresponding to the user activity. The application process may then recognize input to the application based on the interaction event data. The input support process may be configured to avoid providing access to user activity data that is not associated with identified interaction events, hand skeleton detail data, continuous gaze data during the interaction, input provided relative to other apps, and/or other private user data. The interaction data may be formatted to be recognized by a 2D input recognition sub-process within the application, e.g., by a mobile platform or laptop/desktop platform having different input modalities than the device executing the method.

Some implementations protect user privacy by not sending user activity data to an application unless the data is associated with an intention to interact, e.g., not sending non-intentional data such as gaze-only data to an application. In some implementations, a processor performs a method by executing instructions stored on a computer readable medium. The method executes an application as an application process inside an OS of the electronic device. The OS may include an OS process configured to perform an input support process outside of the application process.

The method receives, at the input support process, user activity data corresponding to user activity in a 3D coordinate system.

The method generates, at the input support process, interaction event data for interaction events based on identifying portions of the user activity data corresponding to a first type of user activity. This may involve using criteria to identify portions of the input during which the user exhibits an intention to interact with a UI element. The interaction event data may represent at least a subset of the user activity corresponding to the first type of user activity. In some implementations, interaction event data is only generated for provision to an application for times during which a user is determined to be exhibiting an intention to interact with a UI element of the application. The method may not generate data to provide to the application while the user is simply gazing over content, reading, etc. or not others acting in a way that indicates an intent to interact with a UI element. Thus, the application need not receive user activity data associated with times in between interaction events. In one example, the method only provides data to the application when there is an intention to interact with the application as identified based on identifying the user providing one or more specific gestures, trackpad click or other commands, controller button click or other commands, or otherwise performing activity designated (e.g., by one or more input modality frameworks used by the device) as intentional interaction activity. Thus, in one example, an application only receives information based on a user's gaze at certain points in time rather than based on continuous gaze data. Moreover, the data selected for provision to the application may be limited, e.g., only providing some data such as a point on a UI element at which the user is gazing rather than the actual gaze direction vector or only providing a central hand position rather than all hand joint positions.

The method provides the interaction event data from the input support process to the application, where the application process recognizes input to the application based on the interaction event data.

In some implementations, input support is provided to applications in a format that the applications can recognize using a non-3D gesture recognition framework, e.g., using an in-app framework that receives 2D touch screen events and uses those events as to identify touchscreen input. Providing the information in such a format may facilitate importation of applications from legacy 2D systems into a 3D framework in which new forms of 3D input are available, e.g., enabling importation of mobile applications with little or no changes to the application's own input recognition processes.

In some implementations, a processor performs a method by executing instructions stored on a computer readable medium. The method executes an application as an application process inside an OS of the electronic device. The OS may include an OS process configured to perform an input support process outside of the application process. The method receives, at the input support process, user activity data corresponding to user activity in the 3D coordinate system. The method generates, at the input support process, interaction event data based on the user activity data. The method provides the interaction event data from the input support process to the application, where the application process recognizes input to the application based on the interaction event data. The interaction event data represents the user activity using a format, where the format is recognized by a 2D input recognition framework within the application as input to a 2D user interface of the application comprising the UI elements. In some implementations, the OS is a 3D operating system while the 2D input recognition framework is a framework designed for a 2D operating system.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figures 1A-B illustrate exemplary electronic devices operating in a physical environment in accordance with some implementations.
Figure 2 illustrates views, provided via a device, of virtual elements within the 3D physical environment of Figures 1A-1B in which the user performs a direct interaction in accordance with some implementations.
Figure 3 illustrates a view, provided via a device, of virtual elements within the 3D physical environment of Figures 1A-1B in which the user performs an indirect interaction in accordance with some implementations.
Figure 4 illustrates an exemplary direct interaction, in accordance with some implementations.
Figure 5 illustrates indirect interaction recognition in accordance with some implementations.
Figure 6 illustrates use of an exemplary input support framework to generate interaction data based on hands and gaze data and UI target data, in accordance with some implementations.
Figures 7A-7B illustrate exemplary architectures that receives user activity data and application user interface information at a system process that outputs interaction event data for one or more applications to use to recognize input, in accordance with some implementations.
Figure 8 is a process flow chart illustrating an exemplary process using hands and eye data to provide direct and indirect input in accordance with some implementations.
Figure 9 is a flowchart illustrating a method for supporting application input recognition, in accordance with some implementations.
Figure 10 is a flowchart illustrating another method for supporting application input recognition, in accordance with some implementations.
Figure 11 is a flowchart illustrating another method for supporting application input recognition, in accordance with some implementations.

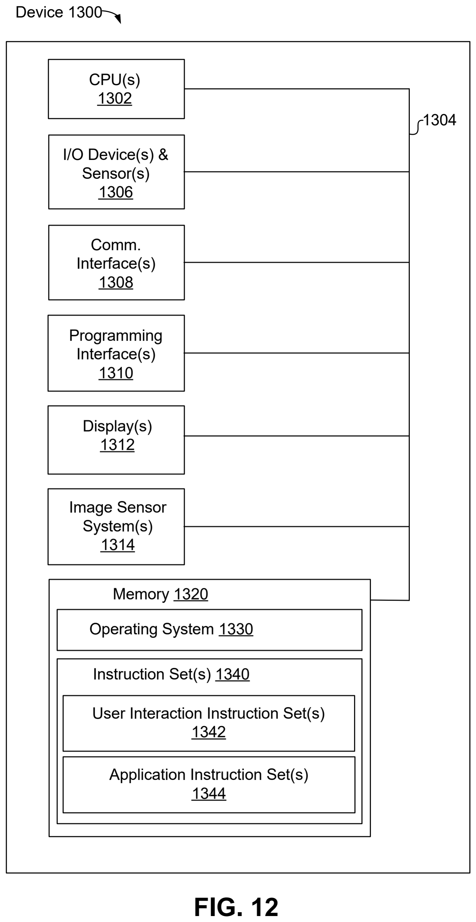

Figure 12 is a block diagram of an electronic device of in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

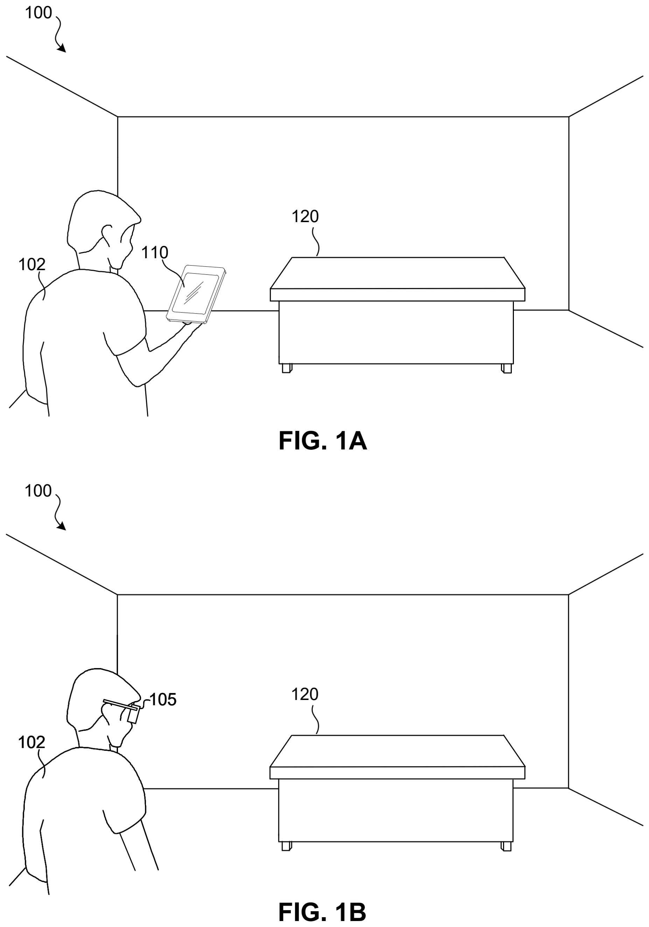

**Figures 1A-B** illustrate exemplary electronic devices 105 and 110 operating in a physical environment 100. In the example of Figures 1A-1B, the physical environment 100 is a room that includes a desk 120. The electronic devices 105 and 110 may include one or more cameras, microphones, depth sensors, or other sensors that can be used to capture information about and evaluate the physical environment 100 and the objects within it, as well as information about the user 102 of electronic devices 105 and 110. The information about the physical environment 100 and/or user 102 may be used to provide visual and audio content and/or to identify the current location of the physical environment 100 and/or the location of the user within the physical environment 100.

In some implementations, views of an extended reality (XR) environment may be provided to one or more participants (e.g., user 102 and/or other participants not shown) via electronic devices 105 (e.g., a wearable device such as an HMD) and/or 110 (e.g., a handheld device such as a mobile device, a tablet computing device, a laptop computer, etc.). Such an XR environment may include views of a 3D environment that is generated based on camera images and/or depth camera images of the physical environment 100 as well as a representation of user 102 based on camera images and/or depth camera images of the user 102. Such an XR environment may include virtual content that is positioned at 3D locations relative to a 3D coordinate system (i.e., a 3D space) associated with the XR environment, which may correspond to a 3D coordinate system of the physical environment 100.

In some implementations, video (e.g., pass-through video depicting a physical environment) is received from an image sensor of a device (e.g., device 105 or device 110). In some implementations, a 3D representation of a virtual environment is aligned with a 3D coordinate system of the physical environment. A sizing of the 3D representation of the virtual environment may be generated based on, *inter alia,* a scale of the physical environment or a positioning of an open space, floor, wall, etc. such that the 3D representation is configured to align with corresponding features of the physical environment. In some implementations, a viewpoint within the 3D coordinate system may be determined based on a position of the electronic device within the physical environment. The viewpoint may be determined based on, *inter alia,* image data, depth sensor data, motion sensor data, etc., which may be retrieved via a virtual inertial odometry system (VIO), a simultaneous localization and mapping (SLAM) system, etc.

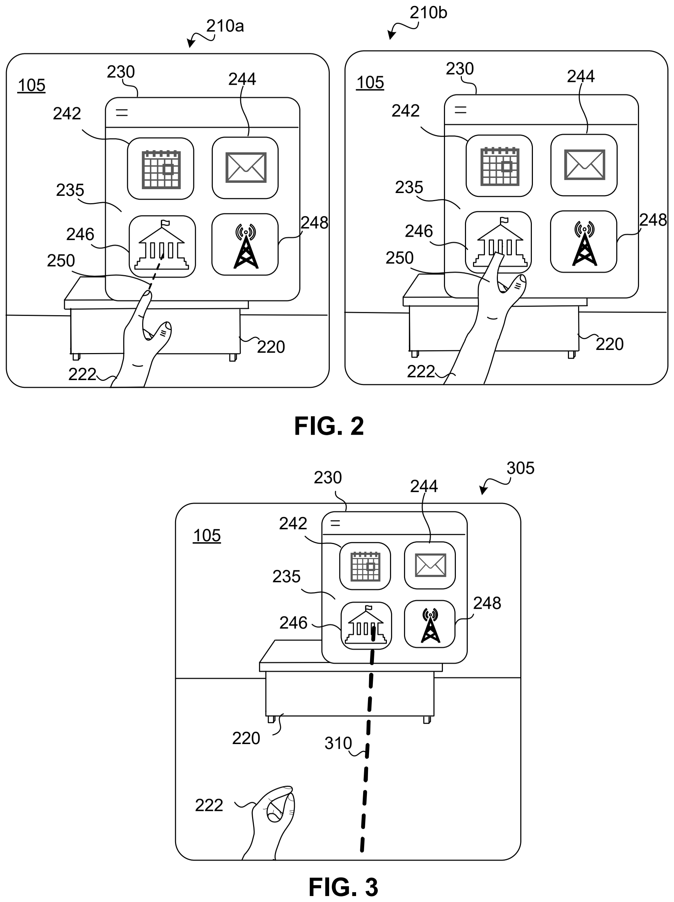

**Figure** 2 illustrates views, provided via a device, of virtual elements within the 3D physical environment of Figures 1A-1B, in which the user performs a direct interaction. In this example, the user 102 makes a hand gesture relative to content presented in views 210a-b of an XR environment provided by a device (e.g., device 105 or device 110). The views 210a-b of the XR environment include an exemplary user interface 230 of an application (i.e., an example of virtual content) and a depiction 220 of the desk 120 (i.e., an example of real content). Providing such a view may involve determining 3D attributes of the physical environment 100 and positioning the virtual content, e.g., user interface 230, in a 3D coordinate system corresponding to that physical environment 100.

In the example of Figure 2, the user interface 230 includes various content user interface elements, including a background portion 235 and icons 242, 244, 246, 248. The icons 242, 244, 246, 248 may be displayed on the flat user interface 230. The user interface 230 may be a user interface of an application, as illustrated in this example. The user interface 230 is simplified for purposes of illustration and user interfaces in practice may include any degree of complexity, any number of content items, and/or combinations of 2D and/or 3D content. The user interface 230 may be provided by operating systems and/or applications of various types including, but not limited to, messaging applications, web browser applications, content viewing applications, content creation and editing applications, or any other applications that can display, present, or otherwise use visual and/or audio content.

In this example, the background portion 235 of the user interface 230 is flat. In this example, the background portion 235 includes all aspects of the user interface 230 being displayed except for the icons 242, 244, 246, 248. Displaying a background portion of a user interface of an operating system or application as a flat surface may provide various advantages. Doing so may provide an easy to understand or otherwise use portion of an XR environment for accessing the user interface of the application. In some implementations, multiple user interfaces (e.g., corresponding to multiple, different applications) are presented sequentially and/or simultaneously within an XR environment, e.g., within one or more colliders or other such components.

In some implementations, the positions and/or orientations of such one or more user interfaces may be determined to facilitate visibility and/or use. The one or more user interfaces may be at fixed positions and orientations within the 3D environment. In such cases, user movements would not affect the position or orientation of the user interfaces within the 3D environment.

The position of the user interface within the 3D environment may be based on determining a distance of the user interface from the user (e.g., from an initial or current user position). The position and/or distance from the user may be determined based on various criteria including, but not limited to, criteria that accounts for application type, application functionality, content type, content/text size, environment type, environment size, environment complexity, environment lighting, presence of others in the environment, use of the application or content by multiple users, user preferences, user input, and numerous other factors.

In some implementations, the one or more user interfaces may be body-locked content, e.g., having a distance and orientation offset relative to a portion of the user's body (e.g., their torso). For example, the body-locked content of a user interface could be 0.5 meters away and 45 degrees to the left of the user's torso's forward-facing vector. If the user's head turns while the torso remains static, a body-locked user interface would appear to remain stationary in the 3D environment at 2m away and 45 degrees to the left of the torso's front facing vector. However, if the user does rotate their torso (e.g., by spinning around in their chair), the body-locked user interface would follow the torso rotation and be repositioned within the 3D environment such that it is still 0.5 meters away and 45 degrees to the left of their torso's new forward-facing vector.

In other implementations, user interface content is defined at a specific distance from the user with the orientation relative to the user remaining static (e.g., if initially displayed in a cardinal direction, it will remain in that cardinal direction regardless of any head or body movement). In this example, the orientation of the body-locked content would not be referenced to any part of the user's body. In this different implementation, the body-locked user interface would not reposition itself in accordance with the torso rotation. For example, a body-locked user interface may be defined to be 2m away and, based on the direction the user is currently facing, may be initially displayed north of the user. If the user rotates their torso 180 degrees to face south, the body-locked user interface would remain 2m away to the north of the user, which is now directly behind the user.

A body-locked user interface could also be configured to always remain gravity or horizon aligned, such that head and/or body changes in the roll orientation would not cause the body-locked user interface to move within the 3D environment. Translational movement would cause the body-locked content to be repositioned within the 3D environment in order to maintain the distance offset.

In the example of Figure 2, the user 102 moves their hand from an initial position as illustrated by the position of the depiction 222 in view 210a. The hand moves along path 250 to a later position as illustrated by the position of the depiction 222 in the view 210b. As the user 102 moves their hand along this path 250, the finger intersects the user interface 230. Specifically, as the finger moves along the path 250, it virtually pierces the icon 246 and thus a tip portion of the finger (not shown) is occluded in view 210b by the user interface 230.

Implementations disclosed herein interpret user movements such as the user 102 moving their hand / finger along path 250 relative to a user interface element such as icon 246 to recognize user input/interactions. The interpretation of user movements and other user activity may be based on recognizing user intention using one or more recognition processes.

Recognizing input in the example of Figure 2 may involve determining that a gesture is a direct interaction and then using a direct input recognition process to recognize the gesture. For example, such a gesture may be interpreted as a tap input to the icon 246. In making such a gesture, the user's actual motion relative to the icon 246 may deviate from an ideal motion (e.g., a straight path through the center of the user interface element in a direction that is perfectly orthogonal to the plane of the user interface element). The actual path may be curved, jagged, or otherwise non-linear and may be at an angle rather than being orthogonal to the plane of the user interface element. The path may have attributes that make it similar to other types of input gestures (e.g., swipes, drags, flicks, etc.) For example, the non-orthogonal motion may make the gesture similar to a swipe motion in which a user provides input by piercing a user interface element and then moving in a direction along the plane of the user interface.

Some implementations disclosed herein determine that a direct interaction mode is applicable and, based on the direct interaction mode, utilize a direct interaction recognition process to distinguish or otherwise interpret user activity that corresponds to direct input, e.g., identifying intended user interactions, for example, based on if, and how, a gesture path intercepts one or more 3D regions of space. Such recognition processes may account for actual human tendencies associated with direct interactions (e.g., natural arcing that occurs during actions intended to be straight, tendency to make movements based on a shoulder or other pivot position, etc.), human perception issues (e.g., user's not seeing or knowing precisely where virtual content is relative to their hand), and/or other direct interaction-specific issues.

Note that the user's movement in the real world (e.g., physical environment 100) correspond to movements within a 3D space, e.g., an XR environment that is based on the real-world and that includes virtual content such as user interface positioned relative to real-world objects including the user. Thus, the user is moving his hand in the physical environment 100, e.g., through empty space, but that hand (i.e., a depiction or representation of the hand) intersects with and/or pierces through the user interface 300 of the XR environment that is based on that physical environment. In this way, the user virtually interacts directly with the virtual content.

**Figure 3** illustrates an exemplary view, provided via a device, of virtual elements within the 3D physical environment of Figures 1A-1B in which the user performs an indirect interaction. In this example, the user 102 makes a hand gesture while looking at content presented in the view 305 of an XR environment provided by a device (e.g., device 105 or device 110). The view 305 of the XR environment includes the exemplary user interface 230 Figure 2. In the example of Figure 3, the user 102 makes a pinching gesture with their hand as illustrated by the depiction 222 while gazing along gaze direction 310 at user interface icon 246. In this example, this user activity (e.g., a pinching hand gesture along with a gaze at a UI element) corresponds to a user intention to interact with user interface icon 246, i.e., the pinch signifies the intention to interact and the gaze (at the point in time of the pinch) identifies the target of the interaction.

Implementations disclosed herein interpret user activity, such as the user 102 forming pinching hand gesture along with a gaze at a UI element, to recognize user/interactions. For example, such user activity may be interpreted as a tap input to the icon 246, e.g., selecting icon 246. However, in performing such actions, the user's gaze direction and/or the timing between a gesture and gaze with which the user intends the gesture to be associated may be less than perfectly executed and/or timed.

Some implementations disclosed herein determine that an indirect interaction mode is applicable and, based on the direct interaction mode, utilize an indirect interaction recognition process to identify intended user interactions based on user activity, for example, based on if, and how, a gesture path intercepts one or more 3D regions of space. Such recognition processes may account for actual human tendencies associated with indirect interactions (e.g., eye saccades, eye fixations, and other natural human gaze behavior, arching hand motion, retractions not corresponding to insertion directions as intended, etc.), human perception issues (e.g., user's not seeing or knowing precisely where virtual content is relative to their hand), and/or other indirect interaction-specific issues.

Some implementations determine an interaction mode, e.g., a direct interaction mode or indirect interaction mode, so that user behavior can be interpreted by a specialized (or otherwise separate) recognition process for the appropriate interaction type, e.g., using a direct interaction recognition process for direct interactions and an indirect interaction recognition process or indirect interactions. Such specialized (or otherwise separate) process utilization may be more efficient, more accurate, or provide other benefits relative to using a single recognition process configured to recognize multiple types (e.g., both direct and indirect) interactions.

Figures 2 and 3 illustrate example interaction modes that are based on user activity within a 3D environment. Other types or modes of interaction may additionally or alternatively be used including but not limited to user activity via input devices such as keyboards, trackpads, mice, hand-held controllers, and the like. In one example, a user provides an interaction intention via activity (e.g., performing an action such as tapping a button or a trackpad surface) using an input device such as a keyboard, trackpad, mouse, or hand-held controller and a UI target is identified based on the user's gaze direction at the time of the input on the input device. Similarly, user activity may involve voice commands. In one example, a user provides an interaction intention via activity (e.g., performing an action such as tapping a button or a trackpad surface) using an input device such as a keyboard, trackpad, mouse, or hand-held controller and a UI target is identified based on the user's gaze direction at the time of the voice command. In another example, user activity identifies an intention to interact (e.g., via a pinch, hand gesture, voice command, input-device input, etc.) and a UI element is determined based on a non-gaze-based direction, e.g., based on where the user is pointing within the 3D environment. For example, a user may pinch with one hand to provide input indicating an intention to interact while pointing at a UI button with a finger of the other hand. In another example, a user may manipulate the orientation of a hand-held device in the 3D environment to control a controller direction (i.e., a virtual line extending from controller within the 3D environment) and a UI element with respect to which the user is interacting may be identified based on the controller direction, i.e., based on identifying what UI element the controller direction intersects with when input indicating an intention to interact is received.

Various implementations disclosed herein provide an input support process, e.g., as an OS process separate from an executing application, that processes user activity data (e.g., regarding gaze, hand gestures, other 3D activities, HID inputs, etc.) to produce data for an application that the application can interpret as user input. The application may not need to have 3D input recognition capabilities, as the data provided to the application may be in a format that the application can recognize using 2D input recognition capabilities, e.g., those used within application developed for use on 2D touch-screen and/or 2D cursor-based platforms. Accordingly, at least some aspects of interpreting user activity for an application may be performed by processes outside of the application. Doing so may simplify or reduce the complexity, requirements, etc. of the application's own input recognition processes, ensure uniform, consistent input recognition across multiple, different applications, protect private use data from application access, and numerous other benefits as described herein.

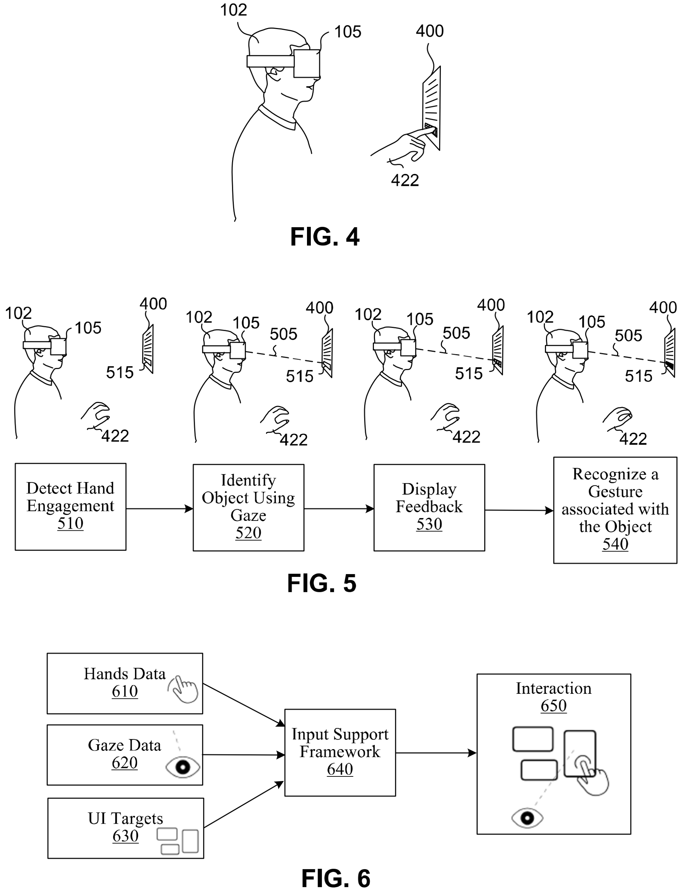

**Figure 4** illustrates an exemplary direct interaction involving a user's hand 422 virtually touching a UI element of a user interface 400. In this example, the user 102 is using device 105 to view and interact with an XR environment that includes the user interface 400. A direct interaction recognition process may use sensor data and/or UI information to determine, for example, which UI element the user's hand is virtually touching and/or where on that UI element the interaction occurs. Direct interaction may additionally (or alternatively) involve assessing user activity to determine the user's intent, e.g., did the user intend to a straight tap gesture through the UI element or a sliding/scrolling motion along the UI element. Such recognition may utilize information about the UI elements, e.g., regarding the positions, sizing, type of element, types of interactions that are capable on the element, types of interactions that are enabled on the element, which of a set of potential target elements for a user activity accepts which types of interactions, etc.

Recognition of such an interaction may be based on functions performed both via a system process and via an application process. For example, an OS's input support process may interpret hands data from the device's sensors to identify an interaction event and provide limited or interpreted information about the interaction event to the application that provided the user interface 400. For example, rather than providing detailed hand information (e.g., identifying the 3D positions of multiple joints of a hand model representing the configuration of the hand 422), the OS input support process may simply identify a 2D point within the 2D user interface 400 on the UI element 515 at which the interaction occurred, e.g., an interaction pose. The application process can then interpret this 2D point information (e.g., interpreting it as a selection, mouse-click, touch-screen tap, or other input received at that point) and provide a response, e.g., modifying its UI accordingly.

**Figure 5** illustrates indirect interaction recognition. In this example, sensor data on device 105 and/or UI information are used to recognize a user interaction made by user 102, e.g., based on outward-facing image sensor data, depth sensor data, eye sensor data, motion sensor data, etc. and/or information made available by an application providing the user interface. Sensor data may be monitored to detect user activity corresponding to an engagement condition corresponding to the start of a user interaction.

In this example, at block 510, the process detects that the user 102 has positioned their hand 422 within view of outward facing image sensors. It may detect a particular hand configuration, e.g., a claw shape, a flat hand, a steady hand in any configuration, etc., as an indication of hand engagement or may simply detect the presence of the hand within sensor view.

At block 520, the process identifies an object using user gaze data. In this example, the process identifies that the gaze direction 505 of user 102 is on user interface element 515.

At block 530, the process displays feedback based on the object identified by the gaze. In this example, the feedback distinguishes user interface element 515 graphically to indicate that the user interface element 515 now has a different state (e.g., a "hover" state that is analogous to the state of a traditional UI icon when a cursor is on the item without clicking/tapping). In this example, the application that provided the UI information need not be notified of the hover state and associated feedback. Instead, the hand engagement, object identification via gaze, and display of feedback can be handled out of process (i.e., outside of the application process), e.g., by the operating system processes. For example, such processes may be provided via an operating system's input support process. Doing so may reduce or minimize potentially sensitive user information (e.g., such as constant gaze direction vectors) that might otherwise be provided to application to enable the application to handle these functions within the application process. Whether and how to display feedback may be specified by the application even though it is carried out of process. For example, the application may define that an element should display hover or highlight feedback and define how the hover or highlight will appear such that the out of process aspect (e.g., operating system) may provide the hover or highlight according to the defined appearance. Alternatively, feedback can be defined out-of-process (e.g., solely by the OS) or defined to use a default appearance/animation if the application does not specify an appearance.

At block 540, the process recognizes a gesture to be associated with the identified object. In this example, the user is gazing in gaze direction 505 at user interface object 515 while (or at least near in time) to a pinch gesture by hand 422. This pinch gesture, in this example, is interpreted to initiate an action upon the user interface object 515, e.g., causing a selection action that is analogous to a cursor "click" event of a traditional UI icon during which a cursor is positioned on an icon and a trigger such as a mouse click or track pad tap is received or similarly analogous to a touch screen "tap" event.

Recognition of such an interaction may be based on functions performed both via a system process and via an application process. For example, an OS's input process may interpret hands and gaze data from the device's sensors to identify an interaction event and provide limited or interpreted/abstracted information about the interaction event to the application that provided the user interface 400. For example, rather than providing gaze direction information identifying gaze direction 505, the OS input support process may identify a 2D point within the 2D user interface 400 on the UI element 515, e.g., an interaction pose. The application process can then interpret this 2D point information (e.g., interpreting it as a selection, mouse-click, touch-screen tap, or other input received at that point) and provide a response, e.g., modifying its UI accordingly.

Figure 5 illustrates examples of recognizing indirect user interactions. Numerous other types of indirect interactions can be recognized, e.g., based on one or more user actions identifying a user interface element and/or one or more user actions providing input (e.g., no-action/hover type input, selection type input, input having a direction, path, speed, acceleration, etc.). Input in 3D space that is analogous to input on 2D interfaces may be recognized, e.g., input analogous to mouse movements, mouse button clicks, touch screen touch events, trackpad events, joystick events, game controller events, etc.

Some implementations utilize an out of process (i.e., outside of an application process) input support framework to facilitate accurate, consistent, and efficient input recognition in a way that preserves private user information. For example, aspects of the input recognition process may be performed out of process such that applications have little or no access to information about where a user is looking, e.g., gaze directions. In some implementations, application access to some user activity information (e.g., gaze direction-based data) is limited to only a particular type of user activity, e.g., activity satisfying particular criteria. For example, applications may be limited to receive only information associated with deliberate or intentional user activity, e.g., deliberate or intentional actions indicative of an intention to interact with (e.g., select, activate, move, etc.) a user interface element.

Some implementations recognize input using functional elements performed both via an application process and a system process that is outside of the application process. Thus, in contrast to a framework in which all (or most) input recognition functions are managed within an application process, some algorithms involved in the input recognition may be moved out of process, i.e., outside of the application process. For example, this may involve moving algorithms that detect gaze input and intent out of an application's process such that the application does not have access to user activity data corresponding to where a user is looking or only has access to such information in certain circumstances, e.g., only for specific instances during which the user exhibits an intent to interact with a user interface element.

Some implementations recognize input using a model in which an application declares or otherwise provides information about its UI elements so that a system process that is outside of the application process can better facilitate input recognition. For example, an application may declare the locations and/or UI behaviors/capabilities of its buttons, scroll bars, menus, objects, and other UI elements. Such declarations may identify how a user interface should behave given different types of user activity, e.g., this button should (or should not) exhibit hover feedback when the user looks at it.

The system process (e.g., outside of the application process) may use such information to provide the desired UI behavior (e.g., providing hover feedback in appropriate user activity circumstances). For example, the system process may trigger hover feedback for a UI element based on a declaration from the application that the app's UI includes the element and that it should display hover feedback, e.g., when gazed upon. The system process may provide such hover feedback based on recognizing the triggering user activity (e.g., gaze at the UI object) and may do so without revealing to the application the user activity details associated with the user activity that triggered the hover, the occurrence of the user activity that triggered the hover feedback, and/or that the hover feedback was provided. The application may be unaware of the user's gaze direction and/or that hover feedback was provided for the UI element.

In another example, an application declares a menu as part of its user interface and declares that the menu is expandable using a set of identified expanded menu options. The system process may handle the expansion of the UI menu. The system process may provide menu expansion (e.g., via a system process outside of the application process) based on recognizing a triggering user activity (e.g., gaze at the menu's label) and may do so without revealing to the application the user activity details associated with the user activity that triggered the menu expansion, the occurrence of the user activity that triggered the menu expansion, and/or that the fact that the menu was expanded. The application may be unaware of the user's gaze direction and/or that the menu was expanded.

Some aspects of input recognition may be handled by the application itself, i.e., in process. However, the system process may filter, abstract, or otherwise manage the information that is made available to the application to recognize input to the application. The system process may do so in ways that facilitate input recognition that is efficient, accurate, consistent (within the application and across multiple applications), and that allow the application to potentially use easier-to-implement input recognition and/or legacy input recognition processes, such as input recognition processes developed for different systems or input environment, e.g., using touch screen input processes used in legacy mobile apps.

Some implementations, use a system process to provide interaction event data to applications to enable the applications to recognize input. The interaction event data may be limited so that all user activity data is not available to the applications. Providing only limited user activity information may help protect user privacy. The interaction event data may be configured to correspond to events that can be recognized by the application using a general or legacy recognition process. For example, a system process may interpret 3D user activity data to provide interaction event data to an application that the application can recognize in the same way that the application would recognize a touch event on a touch screen. In some implementations, an application receives interaction event data corresponding to only certain types of user activity, e.g., intentional or deliberate actions on user interface objects, and may not receive information about other types of user activity, e.g., gaze only activities, a user moving their hands in ways not associated with UI-interactions, a user moving closer to or further away from the user interface, etc. In one example, during a period of time (e.g., a minute, 10 minutes, etc.) a user gazes around a 3D XR environment including gazes at certain user interface text, buttons, and other user interface elements and eventually performs an intentional UI interaction, e.g., by making an intentional pinch gesture while gazing at button X. A system process may handle all of the user interface feedback during the gazing around at the various UI elements without providing the application information about these gazes. On the other hand, the system process may provide interaction event data to the application based on the intentional pinch gesture while gazing at button X. However, even this interaction event data may provide limited information to the application, e.g., providing an interaction position or pose identifying an interaction point on button X without providing information about the actual gaze direction. The application can then interpret this interaction point as an interaction with the button X and respond accordingly. Thus, user behavior that is not associated with intentional user interactions with UI elements (e.g., gaze only hover, menu expansion, reading, etc.) are handled out of process without the application having access to user data and the information about the intentional user interface element interactions is limited such that it does not include all of the user activity details.

**Figure 6** illustrates use of an exemplary input support framework 640 to generate interaction data based on hands data 610, gaze data 620, and UI target data 630 to produce interaction data 650 that can be provided to one or more applications and/or used by system processes to provide a desirable user experience. In some implementations, the input support process 640 is configured to understand a user's intent to interact, generate input signals and events to create reliable and consistent user experiences across multiple applications, detect input out-of-process and route it through the system responsibly. The input support process 640 may arbitrate which application, process, and/or UI element should receive user input, for example, based identifying which application or UI element is the intended target of a user activity. The input support process 640 may keep sensitive user data, e.g., gaze, hand/body enrollment data, etc., private; only sharing abstracted or high-level information with applications.

The input support process may take hands data 610, gaze data 620, and UI target data 630 and determine user interaction states. In some implementations, it does so within a user environment in which multiple input modalities are available to the user, e.g., an environment in which a user can interact directly as illustrated in Figure 2 or indirectly as illustrated in Figure 3 to achieve the same interactions with UI elements. For example, the input support process may determine that the user's right hand is performing an intentional pinch and gaze interaction with a user interface element, that the left hand is directly tapping a user interface element, or that the left hand is fidgeting and therefor idle/doing nothing relevant to the user interface.

Based on determining a user intent to interact, the input support framework 640 may generate interaction data 650 (e.g., including an interaction pose, manipulator pose, and/or interaction state). The input support framework may generate input signals and events that applications may consume without needed custom or 3D input recognition algorithms in process. In some implementations, the input support framework provides interaction data 650 in a format that an application can consume as a touch event on a touch screen or as track pad tap with a 2D cursor at a particular position. Doing so may enable the same application (with little or no additional input recognition processes) to interpret interactions across different environments including new environment for which an application was not originally created and/or using new and different input modalities. Moreover, application responses to input may be more reliable and consistent across applications in a given environment and across different environments, e.g., enabling consistent UI responses for 2D interactions with the application on tablets, mobile devices, laptops, etc. as well as for 3D interactions with the application on an HMD and/or other 3D/XR devices.

The input support framework may also manage user activity data such that different apps are not aware of user activity relevant to other apps, e.g., one application will not receive user activity information while a user types a password into another app. Doing so may involve the input support framework accurately recognizing to which application a user's activity corresponds and then routing the interaction data 650 to only the right application. An application may leverage multiple processes for hosting different UI elements (e.g., using an out-of-process photo picker) for various reasons (e.g., privacy). The input support framework may accurately recognize to which process a user's activity corresponds and route the interaction data 650 to only the right process. The input support framework may use details about the UIs of multiple, potential target apps and/or processes to disambiguate input.

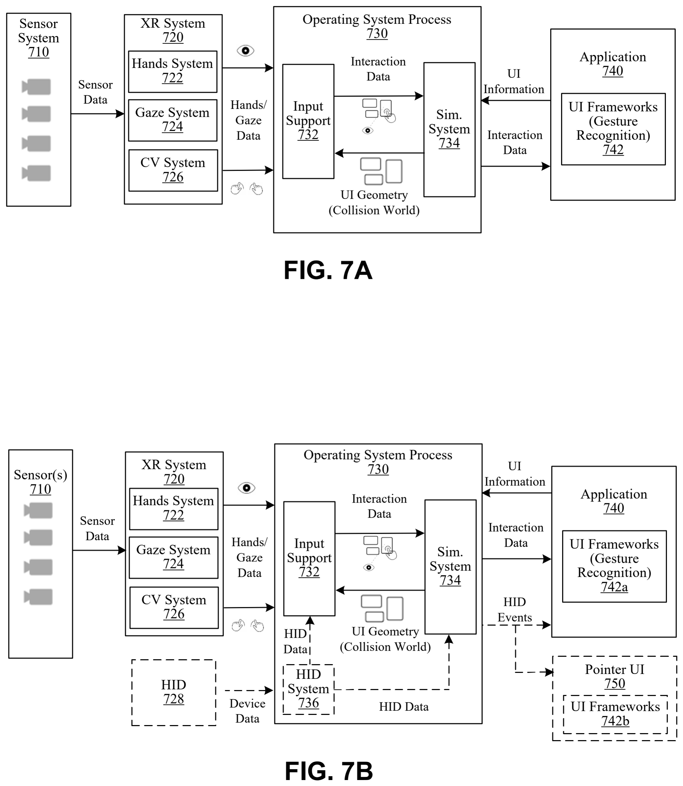

**Figure 7A** illustrates an exemplary architecture that receives user activity data and application UI information at a system process that outputs interaction events data for one or more applications to use to recognize input.

In this example, the sensor system 710 and AR system 720 can be considered a sensing layer, e.g., determining where the user's hands are in the 3D world, where the user is gazing in the 3D world, etc., and the OS process 730 and application 740 can be considered an interaction layer, e.g., determining what the user is interacting with, how the user is interacting, etc.

The sensor system 710 may include various sensors, including, but not limited to, color / RGB image sensors, greyscale image sensors, depth sensors, dynamic vision sensors, motion sensors, etc. The sensor systems may include Image Signal Processor (ISP) components and/or other components that process sensor data.

The sensor system 710 may provide the sensor data to the XR system 720 in various forms. In some implementations, sensor data is sent over time, periodically, and/or at a fixed rate, e.g., at X frames of sensor data per second (fps). In one example, hands data based on images captured by one or more outward facing image sensors (e.g., on a device such as an HMD) is sent to the XR system 720 at a fixed rate (e.g., 10 fps, 20 fps, 30 fps, 60 fps, 120 fps, etc.). In another example, such hands data is sent at a non-fixed rate or otherwise irregularly. In one example, gaze data based on images captured by one or more inward facing image sensors (e.g., on the inside of a device such as an HMD) is sent to the XR system 720 at a fixed rate (e.g., 10 fps, 20 fps, 30 fps, 60 fps, 120 fps, etc.). In another example, such gaze data is sent at a non-fixed rate or otherwise irregularly. Hands data and gaze data may be sent to the XR system 720 at the same or different rates and/or the same or different times. The sensor data may include additional types of information and/or may provide information about other parts of the user or the physical environment in which the user is within. Such other sensor data may be provided at the same or different rates and/or at the same or different times as the hands data and/or gaze data.

The XR system 720 utilizes the received sensor data to perform user activity monitoring and/or tracking. In one example, the XR system 720 is configured to provide relatively low-level tracking algorithms. For example, the hands system 722 of the XR system 720 may use the sensor data to perform a hand tracking algorithm to track the positions, pose (e.g., position and orientation), configuration (e.g., shape), or other aspects of the hand over time. The hands system 722 may generate, update, and/or track a 3D model of a hand, e.g., a model of the hand that represents the hand's shape using defined "joints" or nodes that may or may not correspond to the user's physiological hand joints. In one example, a hand model of 20+ joints is maintained over time based on the sensor data such that the hands data generated by hands system 722 represents the current position/pose/configuration of the hand at different points in time, which may enable determining 3D movements or other changes made by a hand over time. The hands system may alternatively (or additionally) track a subset of points on a surface of the user's hand, e.g., tracking the positions of one or more fingertips/thumb-tips of the user's hand. Such tracking may, but need not, include determining when such portions (e.g., fingertips/thumb-tips) are touching one another and/or other portions of the user or the physical environment. The hands system 722 may output hand position, pose, and/or configuration information as well as confidence values corresponding to such hand data.

The gaze system 724 of the XR system 720 may use the sensor data to perform a gaze tracking algorithm to track eye characteristics such as, but not limited to gaze direction, over time. The gaze system 724 may use the sensor data to directly (e.g., without modeling the shape of the eye and/or head) determine a gaze direction of one or both eyes. The gaze system 724 may use the sensor data to generate, update, and/or track a 3D model of an eye, e.g., a model of the eye that represents the eye's shape based on identifying the positions of points (e.g., eyeball center, cornea center, pupil center, etc.), dimensions (e.g., eye-ball diameter, pupil diameter, etc.), and/or surface portions of the eye. In one example, the gaze system 724 outputs a stream of gaze directions (e.g., vector in 3D space or relative to the user's current position) of each eye over time. In one example, the gaze system 724 outputs gaze directions and confidence values corresponding to such gaze directions.

The XR system 720 may include a computer vision (CV) system 726 that underpins or otherwise supports the hands system 722, gaze system 724, and/or other XR system sub-systems (not shown). For example, the CV system 726 may perform one or more environment and/or user assessment algorithms, e.g., performing simultaneous localization and mapping (SLAM) to model the 3D physical environment and keep track of the user's position relative to that model. In another example, the CV system 726 may identify objects such as walls, doors, tables, appliances, etc., within the physical environment and/or the positions of such objects. In another example, the CV system 726 may perform a semantic understanding algorithm to semantically label objects within the physical environment. In another example, the CV system 726 may use sensor data associated to assess user characteristics (e.g., type of activity currently being performed (e.g., exercise, work, meditation, etc.), posture/motion (e.g., sitting, standing, walking, running, driving, etc.), and/or other user characteristics). Such user characteristic data may be used by hands system 722 and/or gaze system 724 to improve their efficiency and/or accuracy.

In Figure 7A, the XR system 720 provides hands / gaze data to the operating system process 730. The hands/gaze data may be provided periodically (e.g., at a fixed frame rate corresponding to the sensor capture rate or otherwise) or irregularly. In one example, the hands data is provided at the same frame rate per second as the gaze data. In another example, the hands data is provided at a different frame rate than the gaze data.

The hands/gaze data received by the operating system process 730 may be used by the input support process 732 to (1) itself provide/initiate some responses on to user activity on behalf of the application 740 and/or (2) provide some information (e.g., interaction data) to the application 740 to enable the application 740 to respond to user activity. The input support process 740 / operating system process 730 may provide an application with information about a first type of user activity (e.g., activity determined to correspond to intentional user interactions with UI elements). Thus, as illustrated in Figure 7A, the input support process 732 generates interaction data that is provided to the application 740. This interaction data provided to the application 740 may exclude or convert/abstract the hands/gaze data (and other user-based information). The application 740 may receive only interaction data and thus may not receive data about other types of user activities, e.g., user activity deemed to be something other than an intentional interaction with a UI element such as user activity in which the user is simply gazing over the UI or other portions of an XR environment or during which the user is reading text displayed within the application's UI. Note that, in this example of Figure 7A, the interaction data provided by the input support process 732 is provided to the application 740 via a simulation system 734. However, in other examples, the input support process 732 may provide such interaction data to the application 740 directly or via a different intermediary.

In some implementations, the input support system 732 uses information about the user interface of one or more applications such as application 740 to provide input support to those applications. In some implementations, the application 740 sends user interface information to input support system 732 that the input support system 732 utilizes to interpret user interactions associated with the application 740. For example, the application 740 may provide information that defines the appearance of a rectangular region containing a set of user interface elements at specified positions and having certain desired interaction capabilities (e.g., selectable, non-selectable, hoverable, non-hoverable, expandable, non-expandable, etc.). The application 740 may define the type, position, visual appearance, functional characteristics, or other aspects of such elements for use by the input support system 732. The application 740 may provide information to the input support system 732 about its UI elements that defines what information the application 740 will receive. For example, based on defining a button component, the application 740 may receive input events associated with the button when the input support system recognizes user activity (e.g., a pinch and gaze, etc.) as an intentional interaction with the button element.

In some implementations, it may be undesirable for an input support process (e.g., a hit testing process) to receive and/or use an entire UI, e.g., it may be computationally or resource intensive and/or complex to do so. In some implementations, less than all UI information is provided to an input support process. In some implementations, high level information (e.g., window/collider geometry) may be shared with the input support process and the input support process may query/request more information on demand. For example, an input support process may identify user activity/input and perform a hit test based on high level UI information that has been provided by one or more applications or otherwise. In one example, a hit test on a collider identifies an external effect, and the input support process may then ask for more information, e.g., its specific geometry, or more information about any attached gesture recognizers from the OS's simulation system and/or the application that provided the UI having that element. In this exemplary approach, the application still communicates some or all information to the system (e.g., a simulation system provided by the OS), for example, by defining external effects, e.g., communicating everything holistically to the system. However, the input support process need not receive or use the comprehensive information and instead may query for more details about the UI as it discovers (e.g., via hit testing, fuzzy hit testing, etc.) that more information is needed.

In some implementations, the input support system 732 may use information about the positioning of an application user interface and/or the user interface elements within such user interfaces to better understand the user's activity and/or intentions and ultimately to provide a more accurate, more enjoyable, or otherwise better experience for the user. For example, the input support system 732 may use information about the positioning of application user interface and/or the user interface elements within such user interfaces to (a) distinguish user activity associated with a first type of user activity (e.g., intentional interaction events) from other types of user activity, (b) determine to which user activities to respond to directly and to which user activities the application will respond, and thus selectively provide the application 740 with information limited to the user activities to which the application 740 will itself respond, (c) respond to some user activity associated with the application 740 (e.g., providing hover feedback without needing to notify the application 740), and/or (d) target user activity towards one of multiple applications to which user activity could potentially be intended.

In the example of Figure 730, the simulation system process 734 provides the input support process 732 with UI geometry (e.g., collision world) data to enable the input support process 732 to better support input to applications and/or other XR environment elements. The simulation system process 734 may generate, update, and/or maintain information about items within a 3D XR environment, e.g., maintaining a current understanding / snapshot view of everything within the environment. This may involve determining where virtual content will be positioned within a XR environment that is based on a user's physical environment. For example, the simulation system process 734 may determine that a first application's UI is to be positioned above the surface of a user's physical desk in an XR environment and a second applications' UI is to be positioned in front of the window to the side of the user's desk.

The simulation system process 734 may determine where to position and how to configure (e.g., by determining container sizes and dimensions) spaces for application UI content to be rendered within a 3D XR environment based on information provided by the applications. In the example of Figure 7A, the application 740 provides UI information (e.g., that may include UI element declarations) that the simulation system process 734 uses to determine where to position and how to configure the spaces for the application's user interface. In one example, configuring the application's UI involves determining a position for one or more containers/colliders (e.g., one or more flat rectangular or other 2D shaped windows or one or more square or other 3D shaped bounding areas) in which the applications' UI will be positioned in 3D space. The simulation system process 734 may position containers for each of one or more applications based on the UI information (e.g., UI declarations) provided by those applications. It may account for surroundings (e.g., the size of the room or other characteristics the XR environment), the user's position, activity, and preferences, and numerous other considerations in determining where and how to organize and manage the 3D positioning of objects within an XR environment. Applications need not know (or be informed about) the positions of their user interfaces within a 3D XR environment.

The simulation system process 734 may determine not only the positions of user interface container/collider features such as windows containing all application content but also other user interface elements with respect to which user interactions and user activity may relate. Such user interface elements include, but are not limited to, text elements, buttons, sliders, scroll bars, pickers (e.g., color pickers), menu controls, timelines, images, vector graphics, rulers, icons, and tabs.

Tracking user interface element positions within the 3D XR environment and providing such information to input support process 732 may enable input support process 732 to more efficiently, accurately, and effectively support input processes including, but not limited to, supporting input to applications such as application 740. Moreover, using such information may additionally enable input support process 732 to do so in a way that protects the privacy of the user by limiting the information about user activity that is exposed to application 740.

For example, the input support process 732 may use hands data from hands system 722 to determine that a user is not currently making a gesture indicative of interaction intent (e.g., hand is not pinching) and use a gaze direction from the gaze system 724 to determine that the user is gazing at a particular button within the user interface of application 740 within the 3D environment maintained by the simulation system process 734. The input support process 732 can use this to initiate an out of process (e.g., outside of the application process) response, e.g., the simulation system process 734 may provide hover feedback highlighting the button to the user. The application 740 need not receive any information about the user's current user activity (e.g., the user's hand state and/or gaze state) and need not even be aware that the hover feedback was provided by the system. In this example, the input support process 732 uses the UI geometry information provided by the simulation system 734 and based on UI information provided by the application 740 to provide a response on to user activity on behalf of the application 740 without the application needed to itself be involved. Avoiding providing user activity data about some types of user activity (e.g., unintentional activity) can help protect user private data from application 740.

In another example, the input support process 732 may use hands data from hands system 722 to determine that a user is not currently making a gesture indicative of interaction intent (e.g., hand is not pinching) and use a gaze direction from the gaze system 724 to determine that the user is gazing at a menu heading within the user interface of application 740 within the 3D environment maintained by the simulation system process 734. The input support process 732 can use this to initiate an out of process (e.g., outside of the application process) response, e.g., the simulation system process 734 may provide an expansion of the menu showing previously hidden menu options to the user. The application 740 need not receive any information about the user's current user activity (e.g., the user's hand state and/or gaze state) and need not even be aware that the menu was expanded. In this example, the input support process 732 uses the UI geometry information (e.g., identifying the menu and its menu options and their positions within 3D space) provided by the simulation system 734 and based on UI information provided by the application 740 to provide a response on to user activity on behalf of the application 740 without the application needed to itself be involved. Avoiding providing user activity data about some types of user activity (e.g., unintentional activity) can help protect user private data from application 740.

The input support process 732 may additionally (or alternatively) use the UI geometry information (provided by the simulation system 734 and based on UI information provided by the application 740) to provide information to the application 740 to respond itself to user activity. In some implementations, such information is limited to only user activity associated with a first type of user activity, e.g., user activity associated with an intentional interaction with a user interface element. The input support process 732 may provide information (e.g., interaction data) to enable the application 740 to respond to user activity itself. Such information may process or limit the user activity data (e.g., the hands / gaze data received from the XR system 720) such that the application 740 does not obtain detailed user data, e.g., data about specific user gaze directions, user hand size/shape, etc.

For example, the input support process 732 may use hands data from hands system 722 to determine that a user is currently making a gesture indicative of interaction intent (e.g., hand is pinching) and use a gaze direction from the gaze system 724 to determine that the user is gazing at a particular button within the user interface of application 740 within the 3D environment maintained by the simulation system process 734. Based on determining that this user activity (e.g., pinch and gaze) satisfies criteria to qualify as a first type of user activity (e.g., an intentional interaction with a UI element), the input support process 732 can generate data (e.g., interaction data) that is different than the raw hands and raw gaze data to send to the application 740 to enable the application 740 to respond to the user activity itself. The application 740 need not receive the raw hands data and/or the raw gaze data associated with the user's current activity and need not even be aware that the user activity was gaze/hands-based. Rather, the data provided to the application 740 may simply be sufficient for the application 740 to recognize an input event (e.g., a hit event) to the button of the user interface of the application 740. Such data may have been abstracted to use input modality agnostic format or a single input modality format that may differ from the input modalities available on the device (e.g., using a touch-screen input modality format). Avoiding providing detailed user activity (e.g., detailed hands or gaze data) can help protect user private data from application 740.

The data provided to application 740 that enables the application 740 to respond to input to its UI elements can have various forms. In some implementations, such data is limited to only certain types of user activity and thus the data format reflects this, e.g., the application 740 may be provided with data defining an interaction event in circumstances in which the application is to be provided data to respond to intentional UI interaction events. In one example, an application 740 is only provided information identifying a UI element that was interacted with and the type of event, e.g., button X received a hit type interaction.

In other implementations, an application 740 has an input recognition framework for a particular input environment (e.g., a 2D input environment) and the data provided to the application 740 mimics the format of that input environment. For example, an application 740 may be configured with a 2D input recognition framework in which the application 740 is configured to recognize 2D touch input on a touch screen device, e.g., receiving interaction pose data identifying touch points and directions for user touches to a touch screen interface. Note that the term "pose" here refers to such information identifying a 2D position on a touch screen and/or a direction associated with the touch - it may involve receiving only 2D position or it may involve receiving 2D position and directional data. In this example, such an application 740 with a 2D input recognition framework may be provided with data that mimics a touch event. For example, the input support process 732 may use hands data from hands system 722 to determine that a user is currently making a gesture indicative of interaction intent (e.g., hand is pinching) and use a gaze direction from the gaze system 724 to determine that the user is gazing at a particular button within the user interface of application 740 within the 3D environment maintained by the simulation system process 734. The input support process 732 may generate interaction data that identifies the 2D position of the gaze direction relative to the application's user interface element and provides this as an interaction pose to the application 740 so that the application 740 can interpret this as a touch event (e.g., a tap) at that position (on the button) and initiate an appropriate response. The application 740 need only receive the interaction pose without needing to receive the raw hands or gaze data. In this example, the application 740 knows the point of interaction (in its 2D space) but does not know (and does not need to know for input recognition purposes) the gaze direction in the 3D space of the XR environment.

In some implementations, events can contain optional "extra data," e.g., a 2D touch point may identify a 2D position and extra 3D depth information. Such extra information can be leveraged in various ways. For example, if a developer rebuilds an app, the can configure the app to use this extra data. As another example, even if the developer does not rebuild the app, the underlying UI Framework maintained by the operating system provider / application execution environment can leverage this extra data inside its gesture recognizers, since the app will often call higher level APIs, which themselves are built natively for the operating system and linked at runtime.

In some implementations, the use of input support process 732 enables execution of application 740 in an environment different than its original or intended environment. For example, the application 740 may be originally compiled or intended for execution on a mobile device having a 2D touch screen input environment or a laptop having a 2D mouse/trackpad driven environment. The application 740 may be executed within a device that offers 3D input modalities and receive data from the input support process 732 (corresponding to those 3D input modalities that the application 740 cannot directly recognize) in a format that the application 740 can recognize, e.g., as a 2D input corresponding to touch screen or mouse/trackpad-driven input. An application intended for a mobile device, laptop, or other device may be executed within an HMD environment that enables 3D interactions without needing to make significant (or any) modifications to the input recognition processes of the application. In one example, an HMD is configured with binary compatibility to mobile and/or laptop devices, e.g., made capable of executing the binary or object code executable of mobile and/or laptop devices) and provides enhanced input capabilities to mobile and/or laptop applications executing on the HMD by utilizing an input support process 732 that provides data based on user activity in a 3D environment that the applications can recognize as 2D modality-based input.

In the above example, the application 740 may be provided with additional information. For example, the application 740 may receive information about the location of the pinching hand, e.g., a manipulator pose. Such hand information may be higher level than the raw hands data. For example, the application 740 may receive a manipulator pose that identifies the position and/or orientation of the hand within 3D space without receiving information about the hand's configuration and/or information about a 3D model (e.g., of joints) used to represent the hand's positions, pose, and/or configuration in 3D space. In another example, the application 740 may receive information about an interaction state, e.g., identifying a type of interaction as determined by the input support process 732.

In the above example, the criteria for identifying a first type of user activity (e.g., activity associated with intentional user element interaction) involves assessing whether the user's hand exhibited a particular configuration (e.g., a pinch gesture) and, based on identifying the hand exhibiting such a configuration, identifying other concurrent user activity, e.g., identifying where the user is gazing at (or near) that time. Such a pinch may be determined based on criteria that assesses the proximity of portions of a user hand model to one another (e.g., how close is the fingertip to the thumb tip, etc.), using a classifier or other algorithm to label or classify a user hand configuration, or otherwise by processing the hands data. Other types of user activity and/or criteria may be used to identify a first type of user activity (e.g., activity associated with intentional user element interaction). For example, a voice command may be recognized as an indicator of intentional activity, e.g., recognizing a key word or phrase such as "select" or "hit" or "tap" or "click this" and then associating a gaze direction and/or other user activity occurring during or near the time of the utterance of the key word or phrase with the intention to interact, e.g., using the other activity to identify the UI element target upon which the action will be taken.

The input support process 732 may additionally account for sensor-based or other inaccuracies in the hands and/or gaze data. Tracking user application interface element positions within the 3D XR environment and providing such information to input support process 732 may enable it to account for such inaccuracies. Moreover, it may be desirable to a use a system (shared) process so that such inaccuracies can be accounted for consistently and effectively across multiple applications. In other words, it may be desirable to have a single shared process performing such corrections rather than having individual applications doing so. In one example, a user gazes at a button but the gaze system 724 generates a user's gaze direction that is slightly outside of the button (e.g., 0.5 degrees outside). The input support process 732 may correct for this error. For example, it may determine that the gaze was likely actually directed at the button since it is within a threshold (e.g., 1 degree) of the button and there is nothing else nearby. The input support process 732 may correct for this in providing the data to the application 740 that enables the application to respond to the user activity. For example, rather than providing an interaction pose slightly outside of the button, it may provide an interaction pose that is within the button, e.g., at the button's edge. The application 740 thus need not account for the gaze inaccuracy in its own input recognition processes, e.g., it need not itself determine whether an interaction pose just outside of the button should be considered a within the button. This may be particularly useful if the application 740 uses a framework from another input paradigm, e.g., a touch screen paradigm that utilizes different (potentially much smaller) inaccuracy/error thresholds. Such an application would not have to implement different thresholds for different inaccuracy levels expected in different input modalities. Having the input support process (e.g., an OS process) correct for such inaccuracies may provide more consistent and accurate results without requiring that application developers devote extensive resources to addressing such inaccuracies and/or differences amongst different input modalities.

The application 740 may provide UI information to the operating system process 730 in various formats. In some implementations, the application 740 declares its UI elements, e.g., declaring a hierarchy of UI elements within its user interface. Such declarations may include information/instructions that enable the operating system process 730 to respond to some user activity on the application's behalf. In some implementations, the application 740 declares external effects for certain UI elements, e.g., declaring that button X should show hover feedback but that button Y should not show hover feedback. An application 740 may use external effect declarations to specify the behavior that the application 740 intends for some or all of its UI elements. The application may provide a hierarchical declaration structure (e.g., an Apple^{®} Core Animations^{®} (CA) structure) that declares UI element positions, sizes, types, hierarchical relationships, transparent portions, layering effects, special effects, and/or any other information that facilitates the functions provided by the simulation system process 734 and/or the input support process 732. The application 740 may provide such information over an inter-process communication (or otherwise) to the operating system process 730.

The input support process 732 may use such information (e.g., application declarations of UI elements and/or external effects) to better interpret user activity. For example, a given gaze may be between two UI elements, one having external effects and the other not having external effects, and the input support process 732 may move/snap the gaze to the UI element that has the external effects since it is more likely to be the appropriate/intended UI element to which a UI response should be associated. External effects may be performed out of process without application 740 being involved.

In some implementations, an application 740 is enabled to request user permission for specified user data (e.g., detailed hands and/or detailed gaze data) and, if explicitly approved by the user, enabled to receive such information.

In various implementations, hands system 722 may produce different types of data including, but not limited to, timestamp data, joint position data, POV corrections (e.g., to joint positions), world transform data, joint confidence data, palm center data, palm normal direction data, hand action data, hand radius data, pinch data, object detection data (e.g., regarding an object held or touching the hand), and occlusion data, e.g., occlusion probability data regarding one joint being occluded and thus its data potentially less accurate . Similarly, in various implementations, the gaze system 726 may produce different types of data including, but not limited to, timestamp data, world transform data, binocular gaze data, gaze confidence data, gaze tracking state data, gaze direction data, gaze origin data, pupil center data, and pupil diameter data. In some implementations, the XR system includes a frame support module that enables better frame drop support via input frame queuing.

Input support process 732 may have access to rich and detailed hands data and gaze data and use that rich and detailed information to support accurate, efficient, and consistent input responses both within app processes and outside of app processes. However, it may be desirable to keep the details of such rich and detailed user data outside of applications, such as application 740, for example, to prevent such applications from knowing information about the user that the user considers private, e.g., what the user reads, which content they look at and for how long, how quickly the user reads, how big the user's hands/fingers are, hand skeleton bone lengths, missing digits, how the user interacts with other applications or aspects of the XR environment, etc.

**Figure 7B** illustrates another exemplary architecture that receives user activity data and application UI information at a system process that outputs interaction events data for one or more applications to use to recognize input. In this example, the sensor system 710 and AR system 720 can be considered a sensing layer, e.g., determining where the user's hands are in the 3D world, where the user is gazing in the 3D world, how the user is using an input device such as a trackpad or controller, etc., and the OS process 730 and application 740 can be considered an interaction layer, e.g., determining what the user is interacting with, how the user is interacting, etc.

Sensors(s) 710 and XR system components (e.g., hands system 722, gaze system 724, and CV system 726) are similar to those discussed with respect to Figure 7A. In addition, a human interface device (HID) 728 (e.g., a trackpad, 3D mouse, hand-held controller, etc.) provides device HID data to a HID system 736. Such device data may correspond to 2D/3D motion or position data controlling a point, an object, a ray or another form of input affordance that is positioned within an XR environment. For example, a user may manipulate the position and orientation of a hand-held controller to direct a ray/vector within the XR environment towards UI elements. The HID 728 may include multiple input mechanisms, e.g., one to position a ray and one to indicate an intention to interact with what the ray is directed towards. In this example, the user may manipulate the HID 728 and see a visualization of a ray extending from the device in a direction. The user may manipulate the device to point the ray at a button on a user interface of an application and depress a physical button on the HID 728 (while the ray is pointed at the button) to indicate an intention to interact with the button, e.g., initiating a click, tap, hit, etc. on the button.

In the example of Figure 7B, the HID system uses the motion data to provide HID data to both the simulation system 734 (which can position the affordance (e.g., ray, point, etc.) within the 3D XR environment) and the input support process 732 (which can use the HID data to identify intentional interaction, respond to some interactions on behalf of one or more applications, and/or provide data to the one or more applications to enable the one or more applications to respond to HID events without providing detailed or otherwise private user data to the application. In other implementations, information may be provided directing to the input support process 732 (e.g., without needing to share HID data with the reality support system 734). In some implementations, interaction models involving usage of a HID device are included in the interaction state/signals vended by input support process 732 (e.g., the simulation system 734 would receive interaction data, e.g., trackpad plus gaze interactions, from input support process 732 rather than raw trackpad HID event data.

In one example, the input support process 732 recognizes that a ray direction from an HID device intersects an application's UI element and initiates an out of process UI response (e.g., hover feedback on the element) without providing information about the user activity to the application.

In another example, the input support process 732 recognizes a first type of user activity (e.g., an intentional UI element interaction type of activity) based on the HID data satisfying certain criteria (e.g., including an intentional physical button depression, occurring while a keyword/key-phrase is uttered, occurring while the other hand pinches, etc.). The input support process 732 sends interaction data to the application based on this user activity. Note that the same interaction data may be triggered by different types of user activity, e.g., user activity utilizing different interaction modalities such as direct touch, indirect touch, HID-based, etc. The input support process, as described above, may package the data provided to the application 740 in a form that the application 740 can recognize as input without the application needing to have built-in input recognition processes that are specific to some or all of the input modalities. For example, the application 740 may not include controller-ray direction + button click-based 3D input recognition and the input support process can package interaction data associated with such input in a format that the application can understand, e.g., as 2D touch-based input to a touch screen / 2D mouse cursor-based input.

In an alternative implementation, HID data is provided directly to the simulation system 734 and/or application 740 without input support process 732 support.

In some implementations, the HID 728 is a trackpad and the input support process 732 fuses gaze direction and trackpad touch data, e.g., with trackpad touch providing an indication of intentional interaction with a UI element and the gaze direction used to identify the target, e.g., UI element, to be associated with that intentional interaction.

In some implementations, the HID events are provided to a pointer UI process (that is potentially separate from the OS process 730 and/or the application 740). The pointer UI process may control the positioning of an affordance (e.g., point representation, shape representation, ray representation, etc.) that is displayed to the user via a UI framework 742b. In some implementations, the pointer UI process 750 and UI frameworks 742 are within application 740, i.e., are executed in process by application 740.

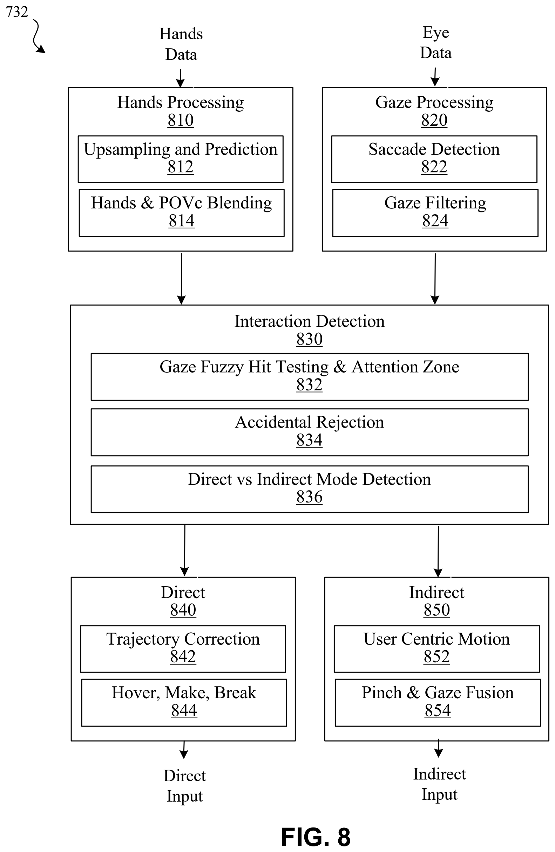

**Figure** 8 is a process flow chart illustrating an exemplary process using hands and eye data to provide direct and indirect input.

In this example, hands data is input to hands processing block 810. An upsampling and prediction block 812 up-samples the hands data (e.g., adding more frames) and makes predictions about future hand locations, paths, trajectories, speeds, accelerations, etc. In some implementations, at a hands input process, the internal states of an upsampler are updated with new observation data from a hands computer-vision-based tracking system. At an interaction detection process, data is received about when the next frame will be rendered, it computes an interpolation/prediction timestamp and queries the upsampler for joints data corresponding to that timestamp. These steps may occur asynchronously and/or at different frame rates. The process may often query upsamples for several predictions at different timestamps in between updates from the computer vision tracking system, e.g., hand tracking may run at 30Hz while the display may render at 90Hz.

The hands and POVc blending block 814 may use corrected and uncorrected hand joint data to mitigate POVc-coupled hand jumps, e.g., that may occur due to background depth and camera switching. The Hands and POVc blending block may compute new hand pose information to address discrepancies between the location of the user's hands in the real world (e.g., tracked by computer vision system), and where the hands appear to be located from the perspective of the user looking at the display. The algorithm may smoothly blend the real & POV-corrected versions of the hand skeleton to create hand pose information that is optimized for input recognition in usage contexts where hand registration to UI is important (e.g., during direct input, where a finger must line up with a button). When a user's hands are outside of a user's field of view (FOV) and/or the view of the sensors, it may not make sense to expend resources or may not otherwise be possible to provide corrections, resulting in jumps in hand position. The process may smoothly blend hands data over time, for example, based on whether the user is in a direct or indirect mode, whether the hand is near a UI element or not, or other factors.

The eye data is input to a gaze processing block 820. The saccade detection block 822 removes saccades, blinks, and/or other gaze-loss events (e.g., leaving only segments of gaze corresponding to fixations). An example saccade detection process may use gaze confidence, tracking state, pupil center, pupil diameter, inter-pupillary distance (IPD), gaze ray data, and velocity data to detect saccades and blinks for removal and/or identify fixations for gaze interactions. It may distinguish between gaze events that are fixations and gaze events that are saccades to facilitate more accurate gaze-based input. The gaze filtering block 824 filters and/or smooths the gaze data signal. This may involve smoothing the gaze data during the fixations. Filtering may be tightly coupled to gaze motion classification. The gaze processing block 820 may lock /remember the last smoothed gaze location for those interim periods or may leverage additional algorithms / policies to "fill in" the data in-between the fixations.

The processed hands and eye data are provided to the interaction detection block 830. Note that the interaction detection block 830 may additionally use UI geometry data including data about an application's user interface. The UI geometry data may be provided at a different rate than the hands and/or eye data. In one example, UI data is received at first rate (e.g., 90 fps) while hands and gaze data a received asynchronously at slower average rates (e.g., at 60 fps). The interaction detection block 830 may additionally use frame target time, e.g., the system's prediction of when this frame will be rendered. The interaction detection block 830 may run asynchronously, e.g., as UI updates and/or gaze/hands data are received.

The gaze fuzzy hit testing and attention zone 832 block identifies virtual elements (e.g., UI elements) that the user gaze is considered to be associated with and an attention zone, e.g., based on head or device orientation/direction. An example gaze fuzzy hit testing process may use gaze ray data, confidence data, gesture data (e.g., hand motion classification), fixation cluster spread data, etc. to loosen / tighten a gaze area/cone-case based on precision of gaze tracking and/or user behavior. This process may utilize UI geometry from the simulation system 734 that is based on UI information provided by applications such as application 740, e.g., identifying interaction targets (e.g., which UI elements to associate with a given user activity) based on declared external effects or the UI elements. Use of such UI information may facilitate more accurate hit testing. In addition to UI geometry, fuzzy hit testing can query more detailed data, e.g., about external effects, gestures, or other context.

The accidental rejection block 834 identifies hand & gaze behavioral instances that were rejected (i.e., associated with subconscious user behaviors that are not intentional interactions) but that are nonetheless still to be associated with virtual elements in appropriate conditions. It attempts to understand the intent behind user motion to better interpret that motion, e.g., as an intentional UI element interaction or something else. An example accidental rejection process may use hand joint data, interaction state history, gaze attention zone data, occlusion data, etc. to reject (or cancel) unintentional user interactions. This process may utilize UI geometry from the simulation system 734 that is based on UI information provided by applications such as application 740, e.g., distinguishing user intentional activity from accidental activity based on the UI elements or their declared external effects that are nearby. Use of such UI information may facilitate more accurate accidental rejection. For example, user motion in a Z direction may be identified as accidental based on determining (from application declared data) that the application's UI is 2D / planar and thus that the motion in the Z direction is unlikely to be intended input to the UI, i.e., it is likely accidental motion not intended to trigger UI interaction, and thus the input support process 732 may be more confident in rejecting the user activity as accidental.

Some implementations support two interaction modes (e.g., a direct interaction mode and an indirect interaction mode). Some implementations support other combinations of interaction modes (e.g., a direct interaction mode, an indirect interaction mode, a gaze-only interaction mode, and/or peripheral device interactions). Processes may be used to determine which, if any, of several interaction models the user is performing. This may involve recognizing and ignoring accidental behavior and also disambiguating which interaction model is intended when the user wants to interact intentionally. In this example, the direct versus indirect mode detection block 836 uses the processed hands and eye data to determine an interaction mode for interpreting user activity, e.g., selecting a direct interaction mode or an indirect interaction mode.

Based on the detected interaction mode, we then run a pipeline specialized for that mode to generate signals & events to drive that interaction. For example, for the direct interaction mode, the hands and eye data (processed and/or unprocessed) is provided to direct interaction recognition block 840, which provides direct input to the user interface. The trajectory correction block 842 may adjust the trajectory of a user motion, e.g., adjusting a user hand motion to account for user behavior in 3D environments, e.g., to make the motion data better correspond to the user's intended motion / intended interactions. The hover, make, break block 844 may perform various recognition processes using a hand gesture, motion path, velocity, acceleration, etc. to identify certain types of direct interactions with a user interface element, e.g., a "hover" interaction based on detecting that a hand/finger is proximate but not touching a user interface element, a "make" interaction based on detecting a point (in 3D space/time) that a hand/finger has made contact with a user interface element, a "break" interaction based on detecting a point (in 3D space/time) that a hand/finger has stopped contacting a user interface element, etc.

Numerous types of direct interactions may be recognized and provided as user input. In another example, a direct interaction is recognized by recognizing that the user makes contact with a slider bar user interface element, moves the hand left a distance X while making contact with the slider bar, and then retracts their hand to break contact with the slider bar. The slider bar may be moved left based on this input, e.g., by a distance X. In another example, the user makes a similar motion to provide input imparting a velocity on a user interface element, e.g., providing 3D swipe gesture through on a user interface to cause the user interface to begin moving and continue moving after the hand breaks contact where the continued motion is based on a velocity having been imparted on the UI object, e.g., analogous to when a user swipes up on a multi-touch interface of a mobile phone.

If an indirect interaction mode is selected, the hands and eye data (processed and/or unprocessed) is provided to indirect interaction recognition block 850, which provides indirect input to the user interface. User centric motion block 852 accounts for user centric motion in the hands data (e.g., accounting for the fact that the user may be making motions that pivot around a rotation point, e.g., a shoulder, elbow, wrist, etc.). User centric motion block 852 may be used to map user hand motion into an object or affordance separate from the hand, e.g., an affordance displayed on application content.

The pinch and gaze fusion block 854 determines which gaze data to associate with a user activity indicative of an intention to interact with a UI element, such as a pinch gesture. Numerous types of indirect interactions may be recognized and provided as user input. In one example, a user pinches fingers together and moves the pinched hand while gazing at a UI element to provide movement input to that UI element. In another example, a user pinches and releases quickly while gazing at a UI element to provide selection events (e.g., analogous to touch screen tap or mouse click input events).

An input support process as illustrated in the example of Figure 8 may perform one or more core functions. In some implementations these functions include, but are not limited to, obtaining gaze data and associating a user's gaze with UI elements associated with one or more applications. Doing so may involve performing a fuzzy hit testing process. Doing so may involve creating an attention zone. An attention zone can be thought of as a spatial zone/area. It is possible for larger objects to be partially inside / partially outside an attention zone, such that the system needs to test where on the object the user was interacting to understand if an interaction point was inside the user's attention zone. An attention zone may include some or all portions of a set of zero or more UI elements that the user is likely giving attention to at a given time. An attention zone may be used to disambiguate between interaction types (e.g., direct v. indirect input modalities), disambiguate which application a user in interacting with, and/or disambiguate which UI elements are the targets of the user's intentions to interact with UI elements.

In some implementations, an input support process 732 relies heavily upon a simulation system 734 to provide a geometric representation of a user interface for hit testing against hands and gaze data. An input support process 732 may use a collision world (e.g., 3D geometry abstractions) provided by a simulation system 734. An input support process 732 may use user interface priority information (e.g., hierarchical display ordering, transparency information, etc.). An input support process 732 may utilize a separate hit-testing process that produces 3D world hit test results (RE). An input support process 732 may utilize a hit testing process uses an application-provided hierarchical tree (e.g., declaring UI elements, relationships, and/or rendering information for example regarding what regions are transparent, rendered on top, etc.) to determine hits / UI element targets to associate with user activity.

In some implementations, performs the functions illustrated in Figure 8 to provide an input support process 732 that produces data for an application. The input support process may produce an interaction state for one or more UI elements, e.g., identifying whether an interaction is direct or indirect, whether an interaction is a hover/close proximity interaction (e.g., associated with user activity not linked to UI interaction behavior) or gesture/pinch/touch interaction (e.g., associated with user activity indicating UI intentional behavior).

In some implementations, an input support process 732 provides an interaction pose, e.g., a trajectory corrected point on a UI element configured to drive a touch-screen tap type of input.

In some implementations, an input support process 732 provides manipulator pose, e.g., corresponding to a position and/or orientation of the hand itself. A manipulator pose may provide a 3D location of a stable hand center or pinch centroid. A manipulator pose may provide position and/or orientation of a manipulator driving the interaction, e.g., for direct touch interactions, providing the index fingertip information (e.g., location) and, for indirect pinch interactions, providing pinch information (e.g., pinch centroid).

In some implementations, an input support process 732 provides an active target (e.g., UI element).

In one example, a user initiates an interaction by pinching while gazing at a UI element. The application receives an interaction pose on the UI element and recognizes the user's intent to interact with the UI element. The user continues pinching and moves their hand to the left. The application receives more interaction poses, e.g., a set of positions on the user interface based on the moving 3D positions of the hand as it moves left, and responds by moving the associated UI element to the left. In this example, by pinching while gazing at a UI object and then moving the pinched hand to the left, the user provides input that the application can recognize to move the object to the left. The application is able to respond accordingly without needing to receive (and without actually receiving) information about the user's gaze directions and/or specific hand characteristics. In this example, the application receives only interaction pose data and thus may be an application capable of only receiving interaction pose data as a proxy for touch input data. The application may additionally or alternatively be provided with manipulator pose data, e.g., of the 3D positions of the hand as it moves left and may determine the motion of the associated object based on the changing manipulator pose position. The application may be provided with user change-based information, e.g., accelerated user-centric deltas providing delta-updates similar to a trackpad communicating the amount the user has moved from frame-to-frame, rather than an absolute position. Communicating changes, e.g., via a separate API, may helps us optimize one set of signals to accurately represent motion (e.g., for scrolling) separate from signals that also need to be absolute-position-accurate (e.g. for drawing).

In some implementations, an input support process 732 receives a gaze direction that could potentially be associated with different UI elements, e.g., because it is between the UI elements or because the UI elements overlap one another. Fuzzy hit testing and other such processes may help disambiguate user intention to identify an appropriate UI element in such cases.

In some implementations, an input support process 732 recognizes two-handed 3D gestures, e.g., a two-handed zoom gesture, and provides information to an application that corresponds to multi-touch touch screen input gestures. Doing so, for example, may involve generating an interaction pose for each hand that can be interpreted by an application's 2D touch-based gesture recognition processes as two touch points moving closer to or farther from one another, which may be interpreted as a pinch-to-zoom touch-screen gesture.

In some implementations, some applications may be enabled to render using custom rendering engines, e.g., straight to display hardware without utilizing OS rendering, and thus provide limited UI element information for input support process 732 to use to support input recognition processes. Such applications may be authorized to use an API that enables the applications to use filtered hands data (e.g., with upsampling, POVc, etc.) and at the movement of an intentional interaction, e.g., during a pinch, a single gaze ray is provided to the applications. Doing so may enable some custom application input recognition while still protecting most of the user's gaze direction data. The applications do not receive continuous gaze direction data in this example. Such a framework may be appropriate, for example, for applications being migrated from another 3D XR framework that already include 3D recognition capabilities built into the apps, e.g., enabling use of such apps with little or no modification while still protecting user privacy.

In some implementations, an application is developed for use on a mobile platform that uses single and/or multi-touch input gestures. The application may be developed by the application developer including calls to a gesture API and then specifying what to do on certain types of touch events, e.g., do X on a tap event, Y on a swipe event, etc. It may be desirable to use such applications on a new or different platform that offers input modalities different than (or in addition to) single and/or multi-touch input gestures. Rather than implementing all new 3D gestures and gesture recognition processes within the application, some implementations disclosed herein interpret 3D user activity (e.g., hand positions, gaze directions, etc.) and send proxy data to the application corresponding to where a touch would be if the 3D user activity had been performed as a 2D touch input gesture. Input support process 732 may provide such proxy data to such applications and, in doing so, enable a large universe of existing 2D/touch-based applications to be easily imported and used within a new 3D system that uses new and different 3D user activity-based inputs. Input support process 732 may make additional information available so that newer / modified applications can take advantage / use more information about the user's 3D activity. Alternatively, this information may be leveraged by an old unmodified application that is linking against XR-compatible versions of UI frameworks, which can under-the-hood take advantage of this extra data on the app's behalf (e.g., a binary compatible app using a standard long press recognizer can benefit from an XR-based OS implementation that uses z-depth of the touch to more accurately recognize long press than a native 2D-only approach).

In some implementations, to enable use of both legacy 2D/touch-based applications and newer applications with additional, 3D recognition capabilities, the input support process may provide multiple types of information, e.g., interaction pose data to support touch-based input recognition by a legacy application as well as manipulator pose data to support applications with additional, 3D recognition capabilities.

Interpreting 3D user activity as 2D touch-based activity can require overcoming various challenges. For example, a user's hand movement in 3D space when performing a touch gesture may be equated with a touch-screen tap gesture but may lack the precision expected for a touch-screen tap gesture. A touch on a touch screen involves contact with a physical surface that stops the finger while a motion "virtually" touching a UI in a 3D XR environment may involve the user's hand poking through the UI element. A user may intend to tap the surface of a virtual button but actually poke through the surface at one position and then retract the hand/finger at a slightly different position. This user activity involving two different UI element positions can be interpreted (by an input support process) as a tap at a single point using various algorithms and/or machine learning processes, e.g., performing a trajectory correction. The application receives the single location (from the input support process) and recognizes it as a touch event. Thus, the input support process 732 may classify and/or interpret user activity to account for unique circumstances of interacting within a 3D environment and package the data provided to the application so that the application does not need to itself distinguish between the action intended by the user and the action actually performed by the user.

The input support process 732 may account for sensor inaccuracy/limitations, e.g., accounting for the fact that gaze direction that are identified may differ from actual gaze directions, in providing data to applications. The applications need not account for such inaccuracies themselves.

In formatting the data for the application in a format the application will understand, the input support process 732 can resolve ambiguities, account for inaccuracies, and/or repackage input provided in an input modality that the application does not/need not itself understand into a format that the application does recognize.

In short, the input support process 732 may perform various process that interpret raw 3D data for consumption by applications so that the applications (and their developers) need not perform those processes via manually-programmed processes. Additionally, performing such processes by a shared OS process can unify the input experience across all apps so that users receive consistent UI response behavior.

Moreover, a shared input support process 732 may enable multiple interaction modalities, e.g., that provide different ways of a user selecting a button, and abstract the user activity data associated with those different modalities for the same types of interactions to provide that same data to the application for different types of input. The input modalities can thus be changed and/or added to over time without requiring changes to the applications, so long as the input support process 732 can abstract the new or changed input modality user activities to the format understood by the applications.

In some implementations, an application utilizes a gesture recognizer that runs within the application process. The gesture recognizer may include a state machine that classifies inputs that are received in a stream of input data, e.g., a tap has started, a tap is ongoing, a tap has ended. An input support process 732 may provide data to the application that are recognized by the gesture recognizer running within the application process as particular types of input, e.g., taps, that may correspond to a single input modality specific to the application, e.g., a touch-based input modality. The input support process 732 may configure the data provided to the application to ensure that the application's process recognizes the user activity accurately, e.g., by provided data in a form that the gesture recognizer expects. In one example, the input support process 732 converts user activity involving a user gaze and a hand gesture to data that can be recognized as touch input. In another example, the input support process 732 converts user activity involve a 6DOF controller and a gaze to data that can be recognized as touch input.

An application developer need not write an application for different input modality platforms. Rather an application developer can write an application for a touch platform (or a generic 2D input modality) and the application may be imported with little or no effort to work within a 3D user activity platform. A single application may be used on mobile devices, laptop devices, tablet devices, desktop devices, and 3D XR devices. The techniques disclosed here can enable binary compatibility, i.e., an application being executable in different environments that utilize different input modalities.

In some implementations, an input support process 732 provides a gesture flag and/or gesture classification to an application, e.g., indicating to the application that the user has raised their hand or recognizing that a particular gesture is a tap, swipe, scroll, etc. as a hint that the application (or UI framework) can use in recognizing the gesture.

In some implementations, an input support process 732 facilitates an application recognizing gaze-only input without providing raw gaze data to the application. This may involve periodically provide gaze data (i.e., the location on a UI element that the user is gazing at). Gaze-only data may be associated with an interaction state and data provided to the applications based on gaze-only data only when the gaze data is associated with a particular interaction state, e.g., providing data when a gaze-hover state is applicable. Such data may be provided only based on express user authorization. For example, when a user stares at a UI element for more than a threshold amount of time the application may be notified and an affordance may be displayed (e.g., a dot). If the user then looks at the affordance, the application may be notified that the stared at UI element has been hit/selected. In another example, a stare at a point within a UI element for more than a threshold amount of time may trigger a hover feedback, which may be handled out of process or by the application. A gaze-only input modality may be another input modality that is abstracted into data provided to an application such that the application can interpret the input, e.g., using a generic or touch-based gesture recognition process.

In some implementations, an input support process determines an interaction state for each hand (e.g., direct versus indirect) and/or an interaction state associated with a user gaze (e.g., gaze only or not gaze only).

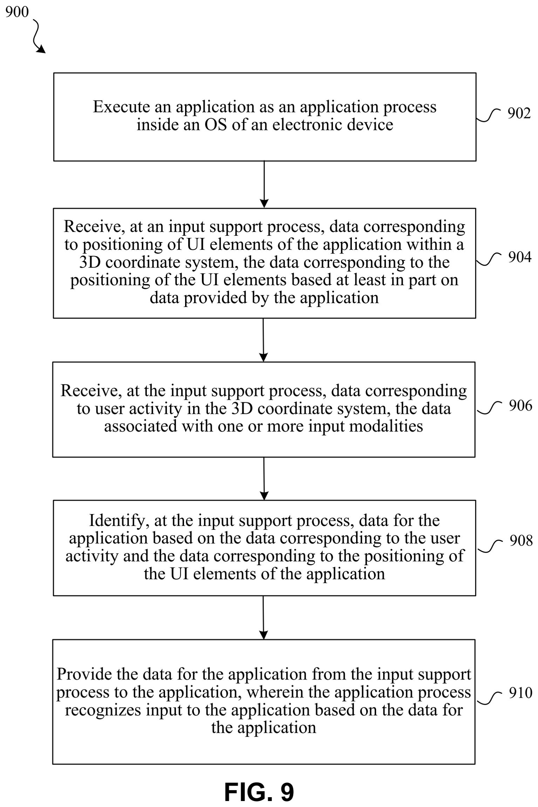

**Figure 9** is a flowchart illustrating a method 900 for supporting application input recognition. In some implementations, a device such as electronic device 105 or electronic device 110 performs method 900. In some implementations, method 900 is performed on a mobile device, desktop, laptop, HMD, or server device. The method 900 is performed by processing logic, including hardware, firmware, software, or a combination thereof. In some implementations, the method 900 is performed on a processor executing code stored in a non-transitory computer-readable medium (e.g., a memory).

At block 902, the method 900 executes an application as an application process inside an operating system (OS) of an electronic device. The OS may include and execute an OS process configured to perform an input support process outside of the application process, such as input support process 732 of Figures 7A and 7B. The OS may include a 3D environment management process, such as simulation system 734 of Figures 7A and 7B. In other implementations, an input support process is executed within an application, e.g., in process.

At block 904, the method 900 receives, at an input support process, data corresponding to positioning of user interface (UI) elements of the application within a 3D coordinate system. The data may correspond to the positioning of the UI element based at least in part on data (e.g., positions/shapes of 2D elements intended for a 2D window area) provided by the application, for example, such as UI information provided from application 740 to operating system process 730 illustrated in Figures 7A and 7B. The data may include user interface geometry (e.g., collision world data) as illustrated in Figures 7A-7B. In some implementations, the operating system manages information about a virtual and/or real content positioned within a 3D coordinate system. Such a 3D coordinate system may correspond to an XR environment representing the physical environment and/or virtual content corresponding to content from one or more apps. The executing application may provide information about the positioning of its UI elements via a layered tree (e.g., a declarative, hierarchical layer tree) with some layers identified for remote (i.e., out of app process) input effects. Such information may be provided via an inter-process communication to a simulation process (e.g., simulation system 734 of Figures 7A and 7B) that positions the application UI element in the 3D coordinate system, e.g., by defining the 3D position of one or more colliders (e.g., each having a rectangular, cubic, or other-shaped window area) in the 3D coordination for the application UI elements to be positioned within.

At block 906, the method 900 receives, at the input support process, data corresponding to user activity in the 3D coordinate system, the data associated with one or more input modalities. As described with respect to Figures 7A and 7B, such data may include but is not limited to including hands data, gaze data, and/or human interface device (HID) data. Various combinations of two or more different types of data may be received, e.g., hands data and gaze data, controller data and gaze data, hands data and controller data, voice data and gaze data, voice data and hands data, etc. Different combinations of sensor/HID data may correspond to different input modalities. In one exemplary implementation, the data includes both hands data (e.g., a hand pose skeleton identifying 20+ joint locations) and gaze data (e.g., a stream of gaze vectors), and both the hands data and gaze data may both be relevant to recognizing input via a direct touch input modality and an indirect touch input modality.

At block 908, the method 900 identifies, at the input support process, data for the application based on the data corresponding to the user activity and the data corresponding to the positioning of the UI elements of the application. The data for the application may include interaction event data. Interaction events may be selected by identifying only certain types of activity, e.g., user activity determined to correspond to a first type of user activity versus one or more other types of user activity. In some implementations, this involves identifying user activity that satisfies criteria configured to distinguish intentional actions on UI elements from other types of user activity.

In some implementations, a first input modality specifies a first, specific user activity as being an indication of an intention to interact with a UI element, e.g., a direct touch input modality may specify that an intersection of a portion of a user's hand with a UI interface element (i.e., a virtual touch) is an indication of an intention to interact with the user interface object. In some implementations, a second input modality specifies a second, specific user activity as being an indication of an intention to interact with a UI element, e.g., an indirect touch input modality may specify that a pinch hand gesture is an indication of an intention to interact with the user interface object. The input support process may be configured to monitor user activity data for indications of intentions to interact via one or more different input modalities. In the above example, this may involve simultaneously monitoring for both a direct virtual touch of a UI element (associated with the direct input modality) and a pinch gesture (associated with the indirect input modality). The occurrence of either type of user activity may be used to trigger the input support process to identify corresponding user event data for an interaction event to be provided to the application.

In some implementations, identifying a first type of user activity involves identifying user activity of a first type that is deemed to be intentional and excluding types of activity such as gaze-only activity that are deemed to be unintentional interactions.

The interaction event data may include an interaction pose (e.g., 6DOF data for a point on the app's UI), a manipulator pose (e.g., 3D location of the stable hand center or pinch centroid), an interaction state (i.e., direct, indirect, hover, pinch, etc.) and/or identify which UI element is being interacted with.

The interaction data may exclude data associated with user activity occurring between intentional events. The interaction event data may exclude detailed sensor/HID data such as hand skeleton data. The interaction event data may abstract detailed sensor/HID data to avoid providing data to the application that is unnecessary for the application to recognize inputs and potentially private to the user.

The input support process may respond to some user activities on behalf of the application without necessarily involving or notifying the application of the user activity or the provided response. For example, the input support process may respond to some user activities by adjusting the appearance of displayed application content without notifying the application, e.g., providing hover feedback based on gaze without notifying the application of the user activity triggering the feedback or of provision of the hover feedback.

At block 910, the method 900 provides the data for the application from the input support process to the application. Access by the application to at least some of the data corresponding to the user activity may be withheld. The application process recognizes input to the application based on the data for the application, e.g., based on interaction event data. The input support process may provide data sufficient for the application to recognize input while avoiding providing the application access to user activity data that is not associated with identified interaction events. Similarly, it may provide abstracted data to avoid providing detailed user activity data, e.g., not providing access to hand skeleton data. The data may be formatted to be recognized by a 2D input recognition process executed within the application, e.g., by an input recognition process configured to recognize abstracted input data and/or input corresponding to an input modality from a legacy or different system, e.g., an input recognition process configured to receive 2D touch-based input.

The method 900 may display a view of an extended reality (XR) environment corresponding to the (3D) coordinate system, where the UI elements of the application are displayed in the view of the XR environment. Such an XR environment may include UI elements from multiple application processes corresponding to multiple applications and the input support process may identify the interaction event data for the multiple applications and route interaction event data to only the appropriate applications, e.g., the applications to which the interactions are intended by the user. Accurately routing data to only the intended applications may help ensure that one application does to misuse input data intended for another application (e.g., one application does not track a user entering a password into another application).

The OS may provide an OS process (e.g., a shared 3D environment tracking / simulation process) configured to perform the input support process outside of the application process. The 3D environment / simulation may be provided for use in tracking virtual content provided by multiple sources, e.g., by the OS itself, multiple system and/or non-system applications provided by the OS provider and/or 3^{rd} parties, etc. The OS may provide an OS process that includes a simulation process configured to perform a simulation of a 3D environment based on a physical environment associated with the 3D coordinate system. Such a simulation process positions the UI elements of the application within the 3D coordinate system based on data provided by the application. It may do the same for multiple applications and may adjust the positioning of such application content within the 3D coordinate system, e.g., based on which application the user is focused upon, user input, and/or other criteria. In one example, the simulation process positions the UI elements by: positioning one or more components within the 3D coordinate system (e.g., positioning colliders (e.g., each having a rectangular window area, cube shape, or other shape) with the 3D coordinate system; and positioning the UI elements of the application on/within the one or more components. The positioning of the UI elements of the application on the one or more components may be defined based on the data provided by the application. The application may be unaware of the positioning of the one or more components within the 3D coordinate system.

In some implementations, the data provided by the application includes a layered tree structure defining the positional and containment relationships of the UI elements relative to one another on a two-dimensional (2D) coordinate system. In some implementations, the layered tree structure defines such positioning for a legacy input modality (e.g., a touch screen modality or 2D desktop/laptop cursor-driven modality). The data provided by the application may identify external effects for some of the UI elements. Such an external effect may specify that the OS process is to provide responses to a specified user activity relative to a specified UI element outside of the application process (e.g., perform hover feedback on this button out of process). The data provided by the application may be provided to the OS process via an inter-process communication link.

The data corresponding to the user activity may have various formats and be based on or include (without being limited to being based on or including) sensor data or HID data. In some implementations, the data corresponding to the user activity includes gaze data including a stream of gaze vectors corresponding to gaze directions over time during use of the electronic device. The data corresponding to the user activity may include hands data including a hand pose skeleton of multiple joints for each of multiple instants in time during use of the electronic device. The data corresponding to the user activity may include both hands data and gaze data. The data corresponding to the user activity may include controller data and gaze data. The data corresponding to the user activity may include, but is not limited to, any combination of data of one or more types, associated with one or more sensors or one or more sensor types, associated with one or more input modalities, associated with one or more parts of a user (e.g., eyes, nose, cheeks, mouth, hands, fingers, arms, torso, etc.) or the entire user, and/or associated with one or more items worn or held by the user (e.g., mobile devices, tablets, laptops, laser pointers, hand-held controllers, wands, rings, watches, bracelets, necklaces, etc.).

In method 900, identifying the interaction event data for the application may involve identifying only certain types of activity within the user activity to be included in the interaction event data. In some implementations, activity (e.g., types of activity) of the user activity that is determined to correspond to unintentional events rather than intentional UI element input is excluded from the interaction event data. In some implementations, passive gaze-only activity of the user activity is excluded from the interaction event data. Such passive gaze-only behavior (not intentional input) is distinguished from intentional gaze-only interactions (e.g., gaze dwell, or performing a gaze up to the sky gesture to invoke/dismiss the gaze HUD, etc.).

In other implementations, some gaze-only activity (e.g., gaze directions only at interaction events) is provided to the application.

Identifying the interaction event data for the application may involve identifying only certain attributes of the data corresponding to the user activity for inclusion in the interaction event data, e.g., including a hand center rather than the positions of all joints used to model a hand, including a single gaze direction or a single HID pointing direction for a given interaction event. In another example, a start location of a gaze direction / HID pointing direction is changed or withheld, e.g., to obscure data indicative of how far the user is from the UI or where the user is in the 3D environment. In some implementations, the data corresponding to the user activity includes hands data representing the positions of multiple joints of a hand and the interaction event data includes a single hand pose that is provided instead of the hands data.

In some implementations, the interaction event data includes one or more of: an interaction pose including position and/or orientation data for an interaction point within the UI elements of the application; a manipulator pose including position and/or orientation data corresponding to a hand within the 3D coordinate system (e.g., 3D location of the stable hand center or pinch centroid); and/or an interaction state including data identifying a type of interaction. The interaction data may include interaction event data that includes an interaction pose, a manipulator pose, and an interaction state, and the receiving application's input recognition process may select which information to use. Some applications may only use some of the data (e.g., a touch-based input recognition process may use only interaction pose) while other applications may use all of the data.

The interaction event data may identify a UI element being interacted with during an interaction event. An application may use this to identify which of its UI elements is the target of the user's interaction or may use the other data (e.g., identifying which UI element an interaction pose is on) to identify which of the UI elements is the target of the user's interaction.

In some implementations, the interaction event data provided to the application excludes data associated with interaction events associated with applications other than the application.

In some implementations, the method 900 is performed by an electronic device that is a head-mounted device (HMD) and/or the XR environment is a virtual reality environment or an augmented reality environment.

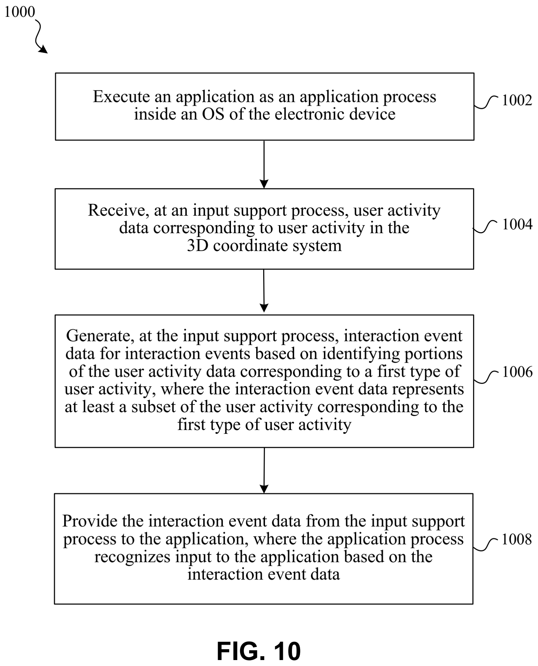

**Figure 10** is a flowchart illustrating another method 1000 for supporting application input recognition. In some implementations, a device such as electronic device 105 or electronic device 110 performs method 1000. In some implementations, method 1000 is performed on a mobile device, desktop, laptop, HMD, or server device. The method 1000 is performed by processing logic, including hardware, firmware, software, or a combination thereof. In some implementations, the method 1000 is performed on a processor executing code stored in a non-transitory computer-readable medium (e.g., a memory).

At block 1002, the method 1000 executes an application as an application process inside an operating system (OS) of an electronic device. The OS may include and execute an OS process configured to perform an input support process outside of the application process, such as input support process 732 of Figures 7A and 7B. The OS may include a 3D environment management process, such as simulation system 734 of Figures 7A and 7B. In other implementations, an input support process is executed within an application, e.g., in process.

At block 1004, the method 1000 receives, at an input support process, data corresponding to user activity in the 3D coordinate system, the data associated with one or more input modalities. As described with respect to Figures 7A and 7B, such data may include but is not limited to including hands data, gaze data, and/or human interface device (HID) data. Various combinations of two or more different types of data may be received, e.g., hands data and gaze data, controller data and gaze data, hands data and controller data, voice data and gaze data, voice data and hands data, etc. Different combinations of sensor/HID data may correspond to different input modalities. In one exemplary implementation, the data includes both hands data (e.g., a hand pose skeleton identifying 20+ joint locations) and gaze data (e.g., a stream of gaze vectors), and both the hands data and gaze data may both be relevant to recognizing input via a direct touch input modality and an indirect touch input modality.

At block 1006, the method 1000 generates, at the input support process, interaction event data for interaction events based on identifying portions of the user activity data corresponding to a first type of user activity (e.g., only user activity in which the user exhibits an intention to interact with a UI element). The interaction event data represents at least a subset of the user activity corresponding to the first type of user activity. In some implementations, the method 1000 only generate event data for times/events when there is an intention to interact with a UI element. The interaction events may be selected by identifying only certain types of activity, e.g., user activity determined to correspond to a first type of user activity versus one or more other types of user activity. In some implementations, this involves identifying user activity that satisfies criteria configured to distinguish intentional actions on UI elements from other types of user activity.

In some implementations, a first input modality specifies a first, specific user activity as being an indication of an intention to interact with a UI element, e.g., a direct touch input modality may specify that an intersection of a portion of a user's hand with a UI interface element (i.e., a virtual touch) is an indication of an intention to interact with the user interface object. In some implementations, a second input modality specifies a second, specific user activity as being an indication of an intention to interact with a UI element, e.g., an indirect touch input modality may specify that a pinch hand gesture is an indication of an intention to interact with the user interface object. The input support process may be configured to monitor user activity data for indications of intentions to interact via one or more different input modalities. In the above example, this may involve simultaneously monitoring for both a direct virtual touch of a UI element (associated with the direct input modality) and a pinch gesture (associated with the indirect input modality). The occurrence of either type of user activity may be used to trigger the input support process to identify corresponding user event data.

In some implementations, identifying a first type of user activity involves identifying user activity of a first type that is deemed to be intentional and excluding types of activity such as gaze-only activity that are deemed to be unintentional interactions.

The interaction event data may include an interaction pose (e.g., 6DOF data for a point on the app's UI), a manipulator pose (e.g., 3D location of the stable hand center or pinch centroid), an interaction state (i.e., direct, indirect, hover, pinch, etc.) and/or identify which UI element is being interacted with.

The interaction data may exclude data associated with user activity occurring between intentional events. The interaction event data may exclude detailed sensor/HID data or detailed information derived from such data, such as hand skeleton data. The interaction event data may abstract detailed sensor/HID data to avoid providing data to the application that is unnecessary for the application to recognize inputs and potentially private to the user.

The input support process may respond to some user activities on behalf of the application without necessarily involving or notifying the application of the user activity or the provided response. For example, the input support process may respond to some user activities by adjusting the appearance of displayed application content without notifying the application, e.g., providing hover feedback based on gaze without notifying the application of the user activity triggering the feedback or of provision of the hover feedback.

At block 1008, the method 1000 provides the interaction event data from the input support process to the application. Access by the application to at least some of the data corresponding to the user activity may be withheld. The application process recognizes input to the application based on the interaction event data. The input support process may provide data sufficient for the application to recognize input while avoiding provided the application access to user activity data that is not associated with identified interaction events. Similarly, it may provide abstracted data to avoid providing detailed user activity data, e.g., not providing access to hand skeleton data. The interaction data may be formatted to be recognized by a 2D input recognition process executed within the application, e.g., by an input recognition process configured to recognize abstracted input data and/or input corresponding to an input modality from a legacy or different system, e.g., an input recognition process configured to receive 2D touch-based input.

In some implementations, the input support process identifies second portions of the user activity data corresponding to a second type of user activity (e.g., involuntary actions, gaze-only events, hover-triggering actions). The application may receive less detailed data (or no data) regarding user activity of the second type than of user activity of the first type. Responses to user activity of the second type may be provided to a user without notifying the application of the user activity of the second type (e.g., involuntary actions, gaze, hover actions). In some implementations, the first type of user activity corresponds to intentional interactions with UI elements and the second type of user activity corresponds to user activity that is different than intentional interactions with UI elements.

The user activity data used by method 900 may include one or more of (but is not limited to including one or more of): gaze data that comprises a stream of gaze vectors corresponding to gaze directions; hands data that comprises a hand pose skeleton of multiple joints; trackpad data that comprises trackpad input; and controller data that comprises controller input associated 3D movements of a hand-held controller.

In some implementations, identifying portions of the user activity data corresponding to a first type of user activity involves identifying an intention to interact based on identifying a hand pinch based on hands data in the user activity data. In some implementations, identifying portions of the user activity data corresponding to a first type of user activity involves identifying an intention to interact based on: identifying a user action indicative of the intention to interact; determining a gaze direction associated with the intention to interact, the gaze direction within a 3D coordinate system; and identifying a UI element of the application positioned within the 3D coordinate system based on the gaze direction, where the interaction event data identifies the interaction with the UI element.

The interaction event data may exclude all gaze direction data. The interaction event data may include only some gaze direction data from a stream of gaze direction data, e.g., including only gaze-direction data associated with interaction events. The interaction event data may include interaction pose data including position and/or orientation data for at least one interaction point within the UI element of the application. The interaction event data may include less than all attributes of hands data in the user activity data for inclusion in the interaction event data, where the hands data represents the positions of multiple joints of a hand. The interaction event data may include a single hand pose that is provided instead of more/all attributes of the hands data for each interaction event. The interaction event data may include manipulator pose data including position and orientation data corresponding to a hand within a 3D coordinate system for each interaction event (e.g., 3D location of the stable hand center or pinch centroid). The interaction event data may include an interaction state comprising data identifying a type of interaction. The interaction event data may include an interaction pose, a manipulator pose, and/or an interaction state comprising data identifying a type of interaction, and/or may identify a UI element being interacted with during an interaction event. The interaction event data provided to the application may exclude data associated with interaction events associated with applications other than the application.

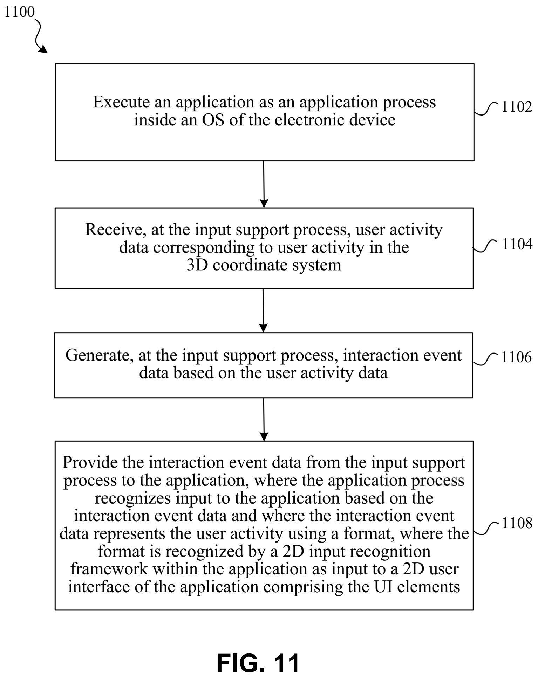

**Figure 11** is a flowchart illustrating another method 1100 for supporting application input recognition. In some implementations, a device such as electronic device 105 or electronic device 110 performs method 1100. In some implementations, method 1100 is performed on a mobile device, desktop, laptop, HMD, or server device. The method 1100 is performed by processing logic, including hardware, firmware, software, or a combination thereof. In some implementations, the method 1100 is performed on a processor executing code stored in a non-transitory computer-readable medium (e.g., a memory).

At block 1102, the method 1100 executes an application as an application process inside an operating system (OS) of an electronic device. The OS may include and execute an OS process configured to perform an input support process outside of the application process, such as input support process 732 of Figures 7A and 7B. The OS may include a 3D environment management process, such as simulation system 734 of Figures 7A and 7B. In other implementations, an input support process is executed within an application, e.g., in process.

At block 1104, the method 1100 receives, at an input support process, data corresponding to user activity in the 3D coordinate system, the data associated with one or more input modalities. As described with respect to Figures 7A and 7B, such data may include but is not limited to including hands data, gaze data, and/or human interface device (HID) data. Various combinations of two or more different types of data may be received, e.g., hands data and gaze data, controller data and gaze data, hands data and controller data, voice data and gaze data, voice data and hands data, etc. Different combinations of sensor/HID data may correspond to different input modalities. In one exemplary implementation, the data includes both hands data (e.g., a hand pose skeleton identifying 20+ joint locations) and gaze data (e.g., a stream of gaze vectors), and both the hands data and gaze data may both be relevant to recognizing input via a direct touch input modality and an indirect touch input modality.

At block 1106, the method 1100 generates, at the input support process, interaction event data based on the user activity data. The interaction event data may represent at least a subset of the user activity corresponding to the first type of user activity. In some implementations, the method 1100 only generate event data for times/events when there is an intention to interact with a UI element. The interaction events may be selected by identifying only certain types of activity, e.g., user activity determined to correspond to a first type of user activity versus one or more other types of user activity. In some implementations, this involves identifying user activity that satisfies criteria configured to distinguish intentional actions on UI elements from other types of user activity.

At block 1108, the method 1100 provides the interaction event data from the input support process to the application. The application process recognizes input to the application based on the interaction event data. The interaction event data may represent the user activity using a format, where the format is recognized by a 2D input recognition framework within the application as input to a 2D user interface of the application comprising the UI elements. In some implementations, the OS is a 3D operating system (OS) and the 2D input recognition framework of the application is a framework designed for a 2D operating system (OS).

The 2D input recognition framework may be configured to recognize the interaction event data as corresponding to input to the 2D user interface. The 2D input recognition framework may be configured to recognize the interaction event data as corresponding to touch input to the 2D user interface. The 2D input recognition framework may be configured to recognize the interaction event data as corresponding to a touch-screen tap input to the 2D user interface. The 2D input recognition framework may be configured to recognize the interaction event data as corresponding to a touch-screen touch gesture having a direction. The 2D input recognition framework may be configured to recognize the interaction event data as corresponding to a touch-screen multi-touch gesture input to the 2D user interface. The 2D input recognition framework may be configured to recognize the interaction event data as corresponding to a 2D mouse cursor position within the 2D user interface. The 2D input recognition framework may be configured to recognize the interaction event data as corresponding to a 2D trackpad cursor position within the 2D user interface. The interaction event data may include additional data corresponding to a 3D aspect of the user activity.

**Figure 13** is a block diagram of electronic device 1300. Device 1300 illustrates an exemplary device configuration for electronic device 110 or electronic device 105. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 1300 includes one or more processing units 1302 (e.g., microprocessors, ASICs, FPGAs, GPUs, CPUs, processing cores, and/or the like), one or more input/output (I/O) devices and sensors 1306, one or more communication interfaces 1308 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, SPI, I2C, and/or the like type interface), one or more programming (e.g., I/O) interfaces 1310, one or more output device(s) 1312, one or more interior and/or exterior facing image sensor systems 1314, a memory 1320, and one or more communication buses 1304 for interconnecting these and various other components.

In some implementations, the one or more communication buses 1304 include circuitry that interconnects and controls communications between system components. In some implementations, the one or more I/O devices and sensors 1306 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more output device(s) 1312 include one or more displays configured to present a view of a 3D environment to the user. In some implementations, the one or more displays 1312 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays correspond to diffractive, reflective, polarized, holographic, etc. waveguide displays. In one example, the device 1300 includes a single display. In another example, the device 1300 includes a display for each eye of the user.

In some implementations, the one or more output device(s) 1312 include one or more audio producing devices. In some implementations, the one or more output device(s) 1312 include one or more speakers, surround sound speakers, speaker-arrays, or headphones that are used to produce spatialized sound, e.g., 3D audio effects. Such devices may virtually place sound sources in a 3D environment, including behind, above, or below one or more listeners. Generating spatialized sound may involve transforming sound waves (e.g., using head-related transfer function (HRTF), reverberation, or cancellation techniques) to mimic natural soundwaves (including reflections from walls and floors), which emanate from one or more points in a 3D environment. Spatialized sound may trick the listener's brain into interpreting sounds as if the sounds occurred at the point(s) in the 3D environment (e.g., from one or more particular sound sources) even though the actual sounds may be produced by speakers in other locations. The one or more output device(s) 1312 may additionally or alternatively be configured to generate haptics.

In some implementations, the one or more image sensor systems 1314 are configured to obtain image data that corresponds to at least a portion of a physical environment. For example, the one or more image sensor systems 1314 may include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 1314 further include illumination sources that emit light, such as a flash. In various implementations, the one or more image sensor systems 1314 further include an on-camera image signal processor (ISP) configured to execute a plurality of processing operations on the image data.

The memory 1320 includes high-speed random-access memory, such as DRAM, SRAM, DDR RAM, or other random-access solid-state memory devices. In some implementations, the memory 1320 includes non-volatile memory, such as one or more magnetic disk storage devices, optical disk storage devices, flash memory devices, or other non-volatile solid-state storage devices. The memory 1320 optionally includes one or more storage devices remotely located from the one or more processing units 1302. The memory 1320 comprises a non-transitory computer readable storage medium.

In some implementations, the memory 1320 or the non-transitory computer readable storage medium of the memory 1320 stores an optional operating system 1330 and one or more instruction set(s) 1340. The operating system 1330 includes procedures for handling various basic system services and for performing hardware dependent tasks. In some implementations, the instruction set(s) 1340 include executable software defined by binary information stored in the form of electrical charge. In some implementations, the instruction set(s) 1340 are software that is executable by the one or more processing units 1302 to carry out one or more of the techniques described herein.

The instruction set(s) 1340 include user interaction instruction set(s) 1342 configured to, upon execution, identify and/or interpret user gestures and other user activities as described herein. The instruction set(s) 1340 include application instruction set(s) 1344 for one or more applications. In some implementations, each of the applications is provided for as a separately-executing set of code, e.g., capable of being executed via an application process. The instruction set(s) 1340 may be embodied as a single software executable or multiple software executables.

Although the instruction set(s) 1340 are shown as residing on a single device, it should be understood that in other implementations, any combination of the elements may be located in separate computing devices. Moreover, the figure is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

It will be appreciated that the implementations described above are cited by way of example, and that the present invention is not limited to what has been particularly shown and described hereinabove. Rather, the scope includes both combinations and sub combinations of the various features described hereinabove, as well as variations and modifications thereof which would occur to persons skilled in the art upon reading the foregoing description and which are not disclosed in the prior art.

As described above, one aspect of the present technology is the gathering and use of sensor data that may include user data to improve a user's experience of an electronic device. The present disclosure contemplates that in some instances, this gathered data may include personal information data that uniquely identifies a specific person or can be used to identify interests, traits, or tendencies of a specific person. Such personal information data can include movement data, physiological data, demographic data, location-based data, telephone numbers, email addresses, home addresses, device characteristics of personal devices, or any other personal information.

The present disclosure recognizes that the use of such personal information data, in the present technology, can be used to the benefit of users. For example, the personal information data can be used to improve the content viewing experience. Accordingly, use of such personal information data may enable calculated control of the electronic device. Further, other uses for personal information data that benefit the user are also contemplated by the present disclosure.

The present disclosure further contemplates that the entities responsible for the collection, analysis, disclosure, transfer, storage, or other use of such personal information and/or physiological data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates implementations in which users selectively block the use of, or access to, personal information data. That is, the present disclosure contemplates that hardware or software elements can be provided to prevent or block access to such personal information data. For example, in the case of user-tailored content delivery services, the present technology can be configured to allow users to select to "opt in" or "opt out" of participation in the collection of personal information data during registration for services. In another example, users can select not to provide personal information data for targeted content delivery services. In yet another example, users can select to not provide personal information, but permit the transfer of anonymous information for the purpose of improving the functioning of the device.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences or settings based on non-personal information data or a bare minimum amount of personal information, such as the content being requested by the device associated with a user, other non-personal information available to the content delivery services, or publicly available information.

In some embodiments, data is stored using a public/private key system that only allows the owner of the data to decrypt the stored data. In some other implementations, the data may be stored anonymously (e.g., without identifying and/or personal information about the user, such as a legal name, username, time and location data, or the like). In this way, other users, hackers, or third parties cannot determine the identity of the user associated with the stored data. In some implementations, a user may access their stored data from a user device that is different than the one used to upload the stored data. In these instances, the user may be required to provide login credentials to access their stored data.

Numerous specific details are set forth herein to provide a thorough understanding of the claimed subject matter. However, those skilled in the art will understand that the claimed subject matter may be practiced without these specific details. In other instances, methods apparatuses, or systems that would be known by one of ordinary skill have not been described in detail so as not to obscure claimed subject matter.

Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general-purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The foregoing description and summary of the invention are to be understood as being in every respect illustrative and exemplary, but not restrictive, and the scope of the invention disclosed herein is not to be determined only from the detailed description of illustrative implementations but according to the full breadth permitted by patent laws. It is to be understood that the implementations shown and described herein are only illustrative of the principles of the present invention and that various modification may be implemented by those skilled in the art without departing from the scope and spirit of the invention.

### Further embodiments:

1. A method comprising:
   at an electronic device having a processor:
   executing an application as an application process inside an operating system (OS) of the electronic device;
   receiving, at an input support process, data corresponding to positioning of user interface (UI) elements of the application within a 3D coordinate system, the data corresponding to the positioning of the UI element based at least in part on data provided by the application;
   receiving, at the input support process, data corresponding to user activity in the 3D coordinate system;
   identifying, at the input support process, data for the application based on the data corresponding to the user activity and the data corresponding to the positioning of the UI elements of the application; and
   providing the data for the application from the input support process to the application, wherein the application process recognizes input to the application based on the data for the application.
2. The method of embodiment 1 further comprising displaying a view of an extended reality (XR) environment corresponding to the (3D) coordinate system, wherein the UI elements of the application are displayed in the view of the XR environment, wherein the XR environment comprises UI elements from multiple application processes corresponding to multiple applications, wherein the input support process identifies data for each of the multiple applications.
3. The method of any of embodiments 1-2, wherein the OS comprises an OS process configured to perform the input support process outside of the application process.
4. The method of embodiment 3, wherein the OS process further comprises a simulation process configured to perform a simulation of a 3D environment based on a physical environment associated with the 3D coordinate system, wherein the simulation process positions the UI elements of the application within the 3D coordinate system based on data provided by the application.
5. The method of embodiment 4, wherein the simulation process positions the UI elements by:
   positioning one or more components within the 3D coordinate system; and
   positions the UI elements of the application on the one or more components, wherein the positioning of the UI elements of the application on the one or more components is defined based on the data provided by the application.
   wherein the application is unaware of the positioning of the one or more components within the 3D coordinate system.
6. The method of any of embodiments 3-5, wherein the data provided by the application comprises a layered tree structure defining the positional and containment relationships of the UI elements relative to one another on a two-dimensional (2D) coordinate system.
7. The method of any of embodiments 3-5, wherein the data provided by the application identifies external effects for some of the UI elements, wherein an external effect specifies that the OS process is to provide responses to a specified user activity relative to a specified UI element outside of the application process.
8. The method of any of embodiments 1-7, wherein the data provided by the application is provided to the OS process via an inter-process communication link.
9. The method of any of embodiments 1-8, wherein the data corresponding to the user activity comprises gaze data comprising a stream of gaze vectors corresponding to gaze directions over time during use of the electronic device.
10. The method of any of embodiments 1-8, wherein the data corresponding to the user activity comprises hands data comprising a hand pose skeleton of multiple joints for each of multiple instants in time during use of the electronic device.
11. The method of any of embodiments 1-8, wherein the data corresponding to the user activity comprises hands data and gaze data.
12. The method of any of embodiments 1-8, wherein the data corresponding to the user activity comprises controller data and gaze data.
13. The method of any of embodiments 1-12, wherein identifying the data for the application comprises identifying interaction event data by identifying only certain types of activity within the user activity to be included.
14. A system comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the system to perform operations comprising any one of the methods of embodiments 1-13.
15. A non-transitory computer-readable storage medium storing program instructions executable via one or more processors to perform operations comprising any one of the methods of embodiments 1-13.

## Claims

1. A method comprising:
at an electronic device having a processor:
executing an application as an application process inside an operating system (OS) of the electronic device;
receiving, at an input support process, user activity data corresponding to user activity in a 3D coordinate system;
generating, at the input support process, interaction event data for interaction events based on identifying portions of the user activity data corresponding to a first type of user activity, wherein the interaction event data represents at least a subset of the user activity corresponding to the first type of user activity; and
providing the interaction event data from the input support process to the application, wherein the application process recognizes input to the application based on the interaction event data.

2. The method of claim 1, wherein the OS comprises an OS process configured to perform the input support process outside of the application process.

3. The method of any of claims 1-2, wherein the input support process identifies second portions of the user activity data corresponding to a second type of user activity, wherein the application receives less detailed data regarding user activity of the second type than of user activity of the first type.

4. The method of claim 3, wherein the application receives no data regarding user activity of the second type.

5. The method of claim 3, wherein responses to user activity of the second type are provided to a user without notifying the application of the user activity of the second type.

6. The method of claim 3, wherein:
the first type of user activity corresponds to intentional interactions with UI elements; and
the second type of user activity corresponds to user activity that is different than intentional interactions with UI elements.

7. The method of any of claims 1-6, wherein the user activity data comprises at least two of:
gaze data that comprises a stream of gaze vectors corresponding to gaze directions;
hands data that comprises a hand pose skeleton of multiple joints;
trackpad data that comprises trackpad input; and
controller data that comprises controller input associated 3D movements of a hand-held controller.

8. The method of any of claims 1-7, wherein identifying portions of the user activity data corresponding to a first type of user activity comprises identifying an intention to interact based on:
identifying a hand pinch based on hands data in the user activity data.

9. The method of any of claims 1-8, wherein identifying portions of the user activity data corresponding to a first type of user activity comprises identifying an intention to interact based on:
identifying a user action indicative of the intention to interact;
determining a gaze direction associated with the intention to interact, the gaze direction within a 3D coordinate system; and
identifying a UI element of the application positioned within the 3D coordinate system based on the gaze direction,
wherein the interaction event data identifies the interaction with the UI element.

10. The method of claim 9, wherein the interaction event data excludes the gaze direction.

11. The method of claim 9, wherein the interaction event data comprises:
interaction pose data comprising position and orientation data for at least one interaction point within the UI element of the application.

12. The method of claim 1-11, wherein the interaction event data includes less than all attributes of hands data in the user activity data for inclusion in the interaction event data, wherein the hands data represents the positions of multiple joints of a hand.

13. The method of any of claims 1-12, wherein the interaction event data comprises:
an interaction pose comprising position and orientation data for an interaction point within the UI elements of the application;
a manipulator pose comprising position and orientation data corresponding to a hand within the 3D coordinate system; and
an interaction state comprising data identifying a type of interaction.

14. A system comprising:
a non-transitory computer-readable storage medium; and
one or more processors coupled to the non-transitory computer-readable storage medium, wherein the non-transitory computer-readable storage medium comprises program instructions that, when executed on the one or more processors, cause the system to perform operations comprising any one of the methods of claims 1-13.

15. A non-transitory computer-readable storage medium storing program instructions executable via one or more processors to perform operations comprising any one of the methods of claims 1-13.
